(19) Europäisches Patentamt
European Patent Office
Office européen des brevets

(11) **EP 4 614 324 A1**

(12) **EUROPEAN PATENT APPLICATION**

(43) Date of publication:
**10.09.2025 Bulletin 2025/37**

(21) Application number: **24215392.2**

(22) Date of filing: **26.11.2024**

(51) International Patent Classification (IPC):
**G06F 9/50** (2006.01)          **G06F 11/34** (2006.01)
**G06F 1/324** (2019.01)          **G06F 1/329** (2019.01)

(52) Cooperative Patent Classification (CPC):
**G06F 9/5094; G06F 1/28; G06F 1/3215;**
**G06F 1/3228; G06F 1/324; G06F 1/329;**
**G06F 1/3296; G06F 11/3428**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **07.03.2024   KR 20240032461**

(71) Applicant: **Samsung Electronics Co., Ltd.**
**Suwon-si, Gyeonggi-do 16677 (KR)**

(72) Inventor: **KIM, Jungho**
**16677 Suwon-si (KR)**

(74) Representative: **Marks & Clerk LLP**
**15 Fetter Lane**
**London EC4A 1BW (GB)**

(54) **NEURAL NETWORK COMPUTING SYSTEM AND NEURAL NETWORK MODEL EXECUTION METHOD**

(57)     A neural network computing system includes a processor including heterogeneous computing devices, a memory, a memory controller that controls the memory, and a system bus that communicates between the processor and the memory controller. The processor generates a frequency level combination table representing frequency level combinations of hardware devices that include the heterogeneous computing devices, the memory controller, and the system bus, each of the frequency level combinations maximizing a decreasing amount of execution time relative to an increasing amount of energy consumption when a performance level of the neural network model is increased by one level, determines, a target performance level, selects a frequency level combination among the frequency level combinations according to the target performance level, and controls, based on a selected frequency level combination, the hardware devices while the neural network model is executed.

FIG. 5

**Description**

BACKGROUND

The present disclosure relates to a neural network computing system and a neural network model execution method.

Recently, research into neural networks, mimicking the learning ability of a human brain to process information, has been actively conducted. Neural network-based computation may be used to accurately recognize and determine objects or specific information from various pieces of user data, such as a voice, an image, and a video.

A processor may include heterogeneous computing devices. The heterogeneous computing devices may include a highly versatile central processing unit (CPU), a neural processing unit (NPU) optimized for neural network computation, and the like. To perform neural network computation, computing devices such as CPUs may be used together with NPUs. When neural network computation is performed using various hardware devices, including the heterogeneous computing devices, an amount of power consumption may increase.

SUMMARY

It is an aspect to provide a neural network computing system and a neural network model execution method capable of reducing an amount of energy consumption of hardware devices while allowing a neural network model to be executed within target execution time.

It is another aspect to provide a neural network computing system and a neural network model execution method capable of reducing overhead for finding an operating frequency combination of heterogeneous computing devices capable of reducing an amount of energy consumption of hardware devices.

According to an aspect of one or more embodiments, there is provided a neural network computing system comprising a processor including a plurality of heterogeneous computing devices, each having a plurality of operating frequency levels; a memory configured to store data associated with execution of a neural network model; a memory controller configured to control data input and output of the memory; and a system bus configured to support communication between the processor and the memory controller,. The processor is configured to generate a frequency level combination table representing a plurality of frequency level combinations of hardware devices, with respect to a plurality of performance levels of the neural network model, the hardware devices including the memory controller, the system bus, and the plurality of heterogeneous computing devices, and each of the plurality of frequency level combinations maximizing a decreasing amount of execution time relative to an increasing amount of energy consumption when a performance level of the neural network model is increased by one level; determine a normalized performance value by performing feedback control based on an error between a target execution time of the neural network model and an actual execution time of the neural network model; determine, based on the normalized performance value, a target performance level, among the plurality of performance levels; select a frequency level combination among the plurality of frequency level combinations according to the target performance level with reference to the frequency level combination table; and control, based on a frequency level combination that is selected, the hardware devices while the neural network model is executed.

According to another aspect of one or more embodiments, there is provided a neural network computing system comprising a processor including a plurality of heterogeneous computing devices, each having a plurality of operating frequency levels; and a memory configured to store data associated with execution of a neural network model. The processor is configured to generate a lowest frequency level combination of the plurality of heterogeneous computing devices for executing the neural network model, and setting the lowest frequency level combination as a current frequency level combination of the plurality of heterogeneous computing devices; generate a higher frequency level combination in which one operating frequency level that maximizes a decreasing amount of execution time relative to an increasing amount of energy consumption, among the plurality of operating frequency levels included in a current frequency level combination, is increased by one level; repeatedly set the higher frequency level combination as the current frequency level combination and generating the higher frequency level combination, until the higher frequency level combination corresponds to a highest frequency level combination of the plurality of heterogeneous computing devices; map the frequency level combinations that are generated to a plurality of performance levels of the neural network model; determine a target performance level, among the plurality of performance levels, by performing feedback control based on an error between a target execution time of the neural network model and an actual execution time of the neural network model; and control operating frequencies of the plurality of heterogeneous computing devices such that the plurality of heterogeneous computing devices have a frequency level combination corresponding to the target performance level.

According to yet another aspect of one or more embodiments, there is provided a neural network computing system comprising a processor including a plurality of heterogeneous computing devices, each having a plurality of operating frequency levels; a memory configured to store data associated with execution of a neural network model; a memory controller configured to control data input and output of the memory; and a system bus configured to support communication between the processor and the memory controller. The processor is configured to trigger, in response to a trigger of the neural network model, frequency scaling of the neural network model; determine, based on an error between a target execution time of the neural network model and an actual execution time of the neural network model, a target performance level of the neural network model; determine, with reference to a frequency level combination table including an operating frequency combination of a plurality of hardware devices for executing the neural network model according to a performance level of the neural network model, an operating frequency of each of the hardware devices according to the target performance level; set, based on operating frequencies of each of the plurality of heterogeneous computing devices of a plurality of neural network models currently being executed, including the neural network model, a system frequency of each of the hardware devices; and execute the neural network model according to the system frequency of each of the hardware devices. The frequency level combination table includes a combination of the plurality of operating frequency levels of the plurality of hardware devices that maximize a decreasing amount of execution time relative to an increasing amount of energy consumption when the performance level of the neural network model is increased by one level, with respect to performance levels of the neural network model.

At least some of the above and other features of the invention are set out in the claims.

BRIEF DESCRIPTION OF DRAWINGS

The above and other aspects will be more clearly understood from the following detailed description, taken in conjunction with the accompanying drawings, in which:

FIG. 1 is a block diagram illustrating a neural network computation system according to an example embodiment;
FIG. 2 is a graph illustrating a point in time at which operating frequency control of hardware devices for executing a neural network model is performed, according to an example embodiment;
FIG. 3 is a diagram illustrating a decreasing amount of execution time of a neural network model relative to an amount of increase in power consumption of a computing device according to a change in operating frequency level of the computing device, according to an example embodiment;
FIG. 4 is a diagram illustrating a structure of a neural network model, according to an example embodiment;
FIG. 5 is a schematic block diagram illustrating a neural network computation system according to an example embodiment;
FIG. 6 is a diagram specifically illustrating an operating frequency decomposer of a neural network computation system, according to an example embodiment;
FIG. 7 is a diagram illustrating a frequency level combination table including a combination of operating frequency levels according to a performance level, according to an example embodiment;
FIG. 8 is a flowchart illustrating a method of finding an operating frequency combination according to a performance level, according to an example embodiment;
FIG. 9 is a diagram illustrating a method of analyzing an execution time ratio using a directed acyclic graph of a neural network model, according to an example embodiment;
FIG. 10 is a diagram illustrating execution time of a neural network model and execution time of each computing device in a longest path, according to an example embodiment;
FIG. 11 is a block diagram illustrating a hierarchical structure of a neural network computation system, according to an example embodiment;
FIG. 12 is a block diagram specifically illustrating a system software layer of a neural network computation system, according to an example embodiment;
FIG. 13 is a diagram illustrating a method of executing a neural network model, according to an example embodiment;
FIG. 14 is a diagram illustrating a neural network computation system, according to an example embodiment; and
FIG. 15 is a diagram illustrating an electronic device to which a neural network computation system according to an example embodiment is applied.

DETAILED DESCRIPTION

Hereinafter, various example embodiments will be described with reference to the attached drawings.

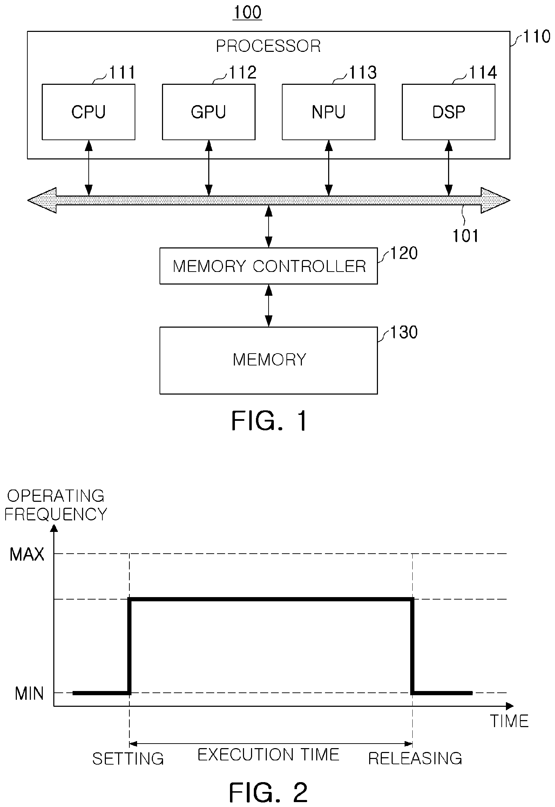

FIG. 1 is a block diagram illustrating a neural network computation system according to an example embodiment.
Referring to FIG. 1, a neural network computing system 100 is illustrated. The neural network computation system 100 may execute a neural network model. The neural network model, modeling a learning method in which a human brain processes information, may refer to a model capable of accurately recognizing and determining an object or specific information from various pieces of user data, such as a voice, an image, and a video. However, this is only an example and, in some example embodiments, the neural network model may be configured to perform other operations than determining an object or specific information from various pieces of user data. The neural network model may be configured to make a prediction based on input data. The neural network model may comprise a series of nodes which each perform a calculation based on respective input data and a corresponding weight (e.g. a parameter). The neural network model may be trained to perform a particular task (e.g. make a prediction) based on training data. The neural network model may be trained by adjusting the parameters of the network based on the training data. The training may comprise optimizing the neural network weights based on an objective function (e.g. to minimize an error or loss). The neural network model may comprise one or more convolution layers (e.g. one or more layers configured to perform a convolution operation on data input into the respective layer).

The neural network computation system 100 may be a mobile system such as a portable communication terminal (mobile phone), a smartphone, a tablet PC (tablet personal computer), a wearable device, a healthcare device, an internet of things (IOT) device, or the like. However, the neural network computation system 100 is not necessarily limited to the mobile system, and, in some example embodiments, may be personal computer, a laptop computer, a server, a media player, or an automotive device such as a navigation.

The neural network computation system 100 may include a plurality of hardware devices such as a processor 110, a memory controller 120, a memory 130, and a system bus 101. The system bus 101 may support communication between the processor 110, the memory controller 120, and the memory 130.

The processor 110 may perform neural network computation using data stored in the memory 130. For example, neural network computation may include an operation of reading data and a weight of each node included in the neural network model, performing convolution computation on the data and the weight, and storing or outputting a computation result.

The memory 130 may store data used by the processor 110 to perform neural network computation. For example, the memory 130 may be loaded with one or more neural network models that may be executed by processor 110. In some example embodiments, input data and output data of the neural network model may be stored in the memory 130. The memory 130 may include volatile memory such as dynamic random access memory (DRAM), synchronous DRAM (SDRAM), static RAM (SRAM), and/or resistive RAM (RRAM), and, in some example embodiments, may include non-volatile memory such as flash memory.

The memory controller 120 may control an operation of storing, in the memory 130, data received from the processor 110, and an operation of outputting, to the processor 110, the data stored in the memory 130.

The processor 110 may include the plurality of heterogeneous computing devices that process and compute data, and the plurality of heterogeneous computing devices may include a central processing unit (CPU) 111, a graphic processing unit (GPU) 112, a neural processing unit (NPU) 113, a digital signal processor (DSP) 114, and the like.

Specifically, the CPU 111 may be a highly versatile computing device. The GPU 112 may be a computing device optimized for parallel computation such as graphics processing. The NPU 113, a computing device optimized for neural network computation, may include logical blocks for executing a unit computation mainly used for neural network computation, such as convolution computation. The DSP 114 may be a computing device optimized for real-time digital processing of an analog signal.

When the processor 110 executes a neural network model, various hardware devices may operate together. For example, in order to execute the neural network model, the plurality of heterogeneous computing devices, such as the NPU 113, the CPU 111, the GPU 112, and the DSP 114, may operate together. In some example embodiments, the memory controller 120 and the system bus 101 may operate to read input data of the neural network model, and to store output data of the neural network model.

Operating frequencies of the hardware devices including the plurality of heterogeneous computing devices, memory controller 120, and system bus 101 may be discretely adjusted. For example, each of the hardware devices may have a plurality of operating frequency levels.

In order to ensure a user-perceived performance of the neural network computation system 100, a target execution time may be set for each neural network model. Execution time of the neural network model may refer to time for the neural network model to receive data and complete processing of the data.

For example, in some example embodiments, a target execution time of 10 ms may be set for a neural network model for receiving an image frame from a camera application of the neural network computation system 100 and detecting an object. In some example embodiments, a target execution time of 15ms may be set for a neural network model for identifying the object. In order to execute the above-described neural network models within target execution time, heterogeneous computing, i.e., accelerating execution of the neural network models via the plurality of heterogeneous computing devices such as the NPU 113, the CPU 111, the GPU 112, and the DSP 114, may be used.

When hardware devices simultaneously operate at their highest operating frequencies to execute a neural network model, an amount of energy consumption of the neural network computation system 100 for executing the neural network model may increase. In order to reduce the amount of energy consumption of the neural network computation system 100, a dynamic voltage frequency scaling (DVFS) mechanism capable of dynamically scaling an operating voltage and an operating frequency has been proposed. For example, with respect to each of heterogeneous computing devices, a governor of a Linux kernel may predict a future utilization rate, based on a past utilization rate, and may determine an operating frequency, based on the predicted future utilization rate.

However, when a neural network computation system determines, based on a utilization rate of each of heterogeneous computing devices, an operating frequency without considering target execution time of a neural network model, it may be difficult for the neural network computation system to maintain the target execution time of the neural network model. That is, responsiveness, a property of the neural network model being completed within the target execution time and providing a response, may be reduced.

In some example embodiments, a system, such as a governor, may determine an operating frequency by performing feedback control based on a past utilization rate. However, the system may operate regardless of whether the neural network model is executed, and a feedback cycle may be several or even tens of times the execution time of the neural network model in some cases. The system, receiving belated feedback after execution of the neural network model is completed and performing operating frequency control, may have difficulty immediately controlling power consumption caused by execution of the neural network model.

The neural network computation system 100 according to an example embodiment may immediately control the operating frequencies of the hardware devices at a point in time at which the neural network model is executed.

FIG. 2 is a graph illustrating a point in time at which operating frequency control of hardware devices for executing a neural network model is performed, according to an example embodiment.

The graph in FIG. 2 illustrates an operating frequency of an arbitrary hardware device over time, in a period in which a neural network model is executed. Referring to FIG. 2, the neural network computation system 100 according to an example embodiment immediately may set an operating frequency of a hardware device when execution of a neural network model starts, may maintain the set operating frequency during execution time of the neural network model, and may release the set operating frequency when execution of the neural network model ends. That is, the neural network computation system 100 may improve responsiveness to the neural network model by performing feedforward control on the operating frequency of the hardware device depending on whether the neural network model is executed.

The neural network computation system 100 may determine an operating frequency level set for execution of the neural network model by performing feedback control based on a previous execution result of the neural network model.

According to an example embodiment, the neural network computation system 100 may determine, based on an error between a target execution time and an actual execution time of a neural network model, a target performance level for executing the neural network model, and may determine a frequency level combination of hardware devices capable of minimizing an amount of energy consumption for executing the neural network model while maintaining the target execution time of the neural network model.

A combination of operating frequencies of hardware devices capable of minimizing an amount of energy consumption for executing a neural network model while providing the same performance level may vary depending on power consumption characteristics of the hardware devices and components of the neural network model. For example, time for each of the hardware devices to execute the neural network model may vary depending on a structure of the neural network model, and an amount of power consumption may vary depending on the operating frequencies of the hardware devices. Accordingly, the combination of operating frequencies of hardware devices capable of minimizing the amount of energy consumption may vary depending on the neural network model.

According to an example embodiment, the neural network computation system 100 may find, based on power consumption characteristics of hardware devices and a structure of a neural network model, operating frequency levels of the hardware devices capable of minimizing an amount of energy consumption while achieving a target performance level, and may control the hardware devices to have the operating frequency levels.

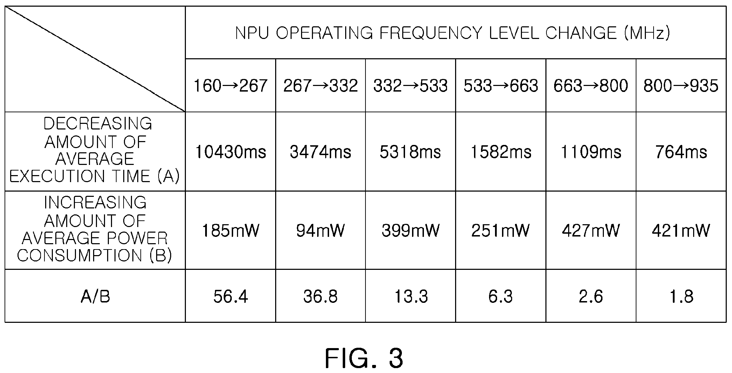

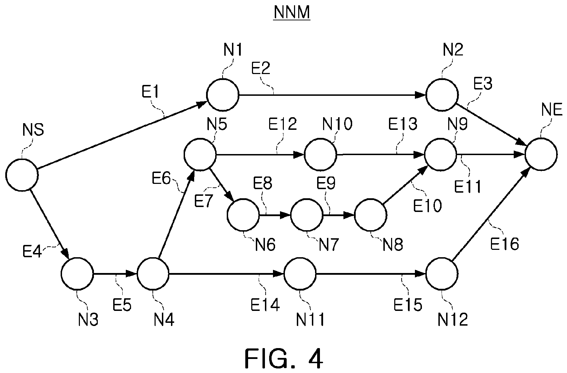

Hereinafter, an example of power consumption characteristics of a hardware device is described with reference to FIG. 3, according to an example embodiment, and a structure of a neural network model is described with reference to FIG. 4, according to an example embodiment.

FIG. 3 is a diagram illustrating an amount of decrease in execution time of a neural network model relative to an amount of increase in power consumption of a computing device according to a change in operating frequency level of the computing device, according to an example embodiment.

In the example of FIG. 3, the NPU 113, among heterogeneous computing devices, may have a plurality of operating frequency levels. For example, the NPU 113 may have operating frequency levels respectively having operation frequencies of 160 MHz, 267 MHz, 332 MHz, 533 MHz, 663 MHz, 800 MHz, and 935 MHz. FIG. 3 illustrates an amount of decrease in average execution time of a neural network model and an amount of increase in average power consumption of the NPU 113, when the neural network model is executed by increasing the operating frequency level of the NPU 113 by one level.

Referring to FIG. 3, as the operating frequency level of the NPU 113 increases, an amount of average power consumption may increase relative to the amount of decrease in average execution time when the operating frequency level is increased by one level. That is, as the operating frequency level of the NPU 113 increases, a one-level increase in the operating frequency level may not relatively highly assist in reducing the average execution time, but may cause a decrease in power efficiency. That is, as the operating frequency increases, the additional amount of power needed to achieve a 1 ms reduction in execution time may increase.

As described with reference to FIG. 1, the processor 110 of the neural network computing system 100 may include heterogeneous computing devices such as the CPU 111, the GPU 112, the NPU 113, and the DSP 114. Each of the heterogeneous computing devices may have a plurality of operating frequency levels, and power efficiencies according to the operating frequency levels of the heterogeneous computing devices may be different from each other. For example, an amount of power consumption at a maximum operating frequency level of the NPU 113 may be three or more times greater than an amount of power consumption at a maximum operating frequency level of the CPU 111.

To execute a single neural network model, the heterogeneous computing devices may have different degrees of involvement. For example, amounts of computation of the heterogeneous computing devices for executing the neural network model may be different from each other, and execution time ratios (e.g. a length of execution time of a computing device relative to a length of execution time of the neural network model) of the heterogeneous computing devices may be different from each other. The neural network computation system 100 may individually control an operating frequency level of each of the heterogeneous computing devices so as to reduce an amount of power consumption of the neural network computation system 100 while maintaining the target execution time of the neural network model.

When the neural network computing system 100 controls the operating frequency levels of the heterogeneous computing devices depending on the execution time ratios of the heterogeneous computing devices so as to execute the neural network model, it may be difficult to reduce an amount of energy consumption of the neural network computing system 100. For example, in case in which the NPU 113 is most involved in execution of the neural network model, when the NPU 113 is set to have a relatively high operating frequency level relative to other computing devices, the neural network model may have shorted execution time, but the NPU 113 may have lowered power efficiency. Accordingly, an amount of energy consumption of the neural network computation system 100 may increase.

According to an example embodiment, the neural network computation system 100 may set, based on execution time ratios of heterogeneous computing devices for executing a neural network model and an amount of power consumption according to operating frequency levels of the heterogeneous computing devices, operating frequency levels of each of the heterogeneous computing devices to minimize an amount of energy consumption while maintaining target execution time of the neural network model.

Hereinafter, before the neural network computation system 100 according to an example embodiment is described in detail, a structure of a neural network model is described with reference to FIG. 4.

FIG. 4 is a diagram illustrating a structure of a neural network model, according to an example embodiment.

Referring to FIG. 4, a neural network model NNM may include a plurality of nodes NS, N1 to N12, and NE, and a plurality of edges E1 to E16. The neural network model NNM may be represented as a directed acyclic graph. The directed acyclic graph may refer to a graph in which individual elements are oriented in a specific direction and do not cycle with respect to each other.

Each of the plurality of nodes NS, N1 to N12, and NE may model a neuron, a basic unit of a nervous system. Each of the plurality of nodes NS, N1 to N12, and NE may include source codes representing computation to be executed. The plurality of nodes NS, N1 to N12, and NE may be executed by one of heterogeneous computing devices included in a processor. The plurality of nodes NS, N1 to N12, and NE may further include an attribute value representing a target computing device on which source codes are to be executed.

The plurality of nodes NS, N1 to N12, and NE may include a start node NS, first to twelfth nodes N1 to N12, and an end node NE. The starting node NS may be a node externally receiving input data to execute the neural network model NNM. The end node NE may be a node externally outputting result data after execution of the neural network model NNM is completed. The first to twelfth nodes N1 to N12 may be nodes for generating, based on input data, result data.

Input/output relationships of the plurality of nodes NS, N1 to N12, and NE may be represented as a plurality of edges E1 to E16. For example, a second edge E2 may represent a relationship in which data output from the first node N1 is input to the second node N2. For example, in a case in which the CPU 111 executes the first node N1 and the NPU 113 executes the second node N2, the CPU 111 may store output data in a memory 130 via a memory controller 120 by completing computation of the first node N1. The NPU 113 may acquire the data stored in the memory 130 via the memory controller 120, and may execute the second node N2 using the acquired data.

According to an example embodiment, the neural network computation system 100, described above with reference to FIG. 1, may perform feedback control on the target execution time and the actual execution time of a neural network model, thereby determining a target performance level for executing the neural network model.

In some example embodiments, the neural network computation system 100 may analyze execution time ratios of computing devices executing the plurality of nodes NS, N1 to N12, and NE, and may determine a combination of operating frequency levels capable of achieving, based on the execution time ratios of the computing devices and an amount of power consumption according to operating frequency levels of the computing devices, the target performance level while minimizing an amount of energy consumption. The neural network computing system 100 may control, based on a combination of operating frequency levels of the heterogeneous computing devices, operating frequencies of hardware devices including the heterogeneous computing devices.

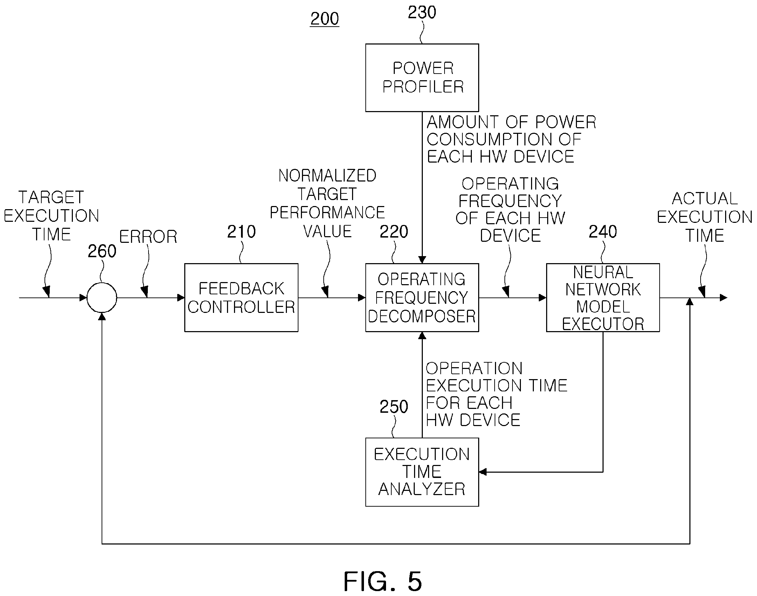

Hereinafter, a neural network computation system according to an example embodiment will be described in detail with reference to FIGS. 5 to 14.

FIG. 5 is a schematic block diagram illustrating a neural network computation system according to an example embodiment.

Referring to FIG. 5, a neural network computation system 200 may include a feedback controller 210, an operating frequency decomposer 220, a power profiler 230, a neural network model executor 240, an execution time analyzer 250, and an error calculator 260. In an example embodiment, the neural network computation system 200 in FIG. 5 may correspond to the neural network operation system 100 in FIG. 1. The feedback controller 210, the operating frequency decomposer 220, the power profiler 230, the neural network model executor 240, the execution time analyzer 250, and the error calculator 260 may be implemented in software, and may be executed by hardware devices such as the processor 110, the memory controller 120, and the memory 130 described with reference to FIG. 1.

The neural network model executor 240 may control, based on a control signal output from the operating frequency decomposer 220, operating frequencies of hardware devices included in the neural network computation system 200, and may control the hardware devices to execute a neural network model while operating according to the operating frequencies. In some example embodiments, the neural network model executor 240 may feed an execution time for each of the nodes and edges of the neural network model back to the execution time analyzer 250, and may feed an actual execution time of the neural network model back to the error calculator 260.

The execution time analyzer 250 may analyze, based on the execution time of each of the nodes and the edges of the neural network model, an execution time of each hardware device and a total execution time of the neural network model. For example, the execution time analyzer 250 may analyze, based on a computing device on which each of the nodes of the neural network model is executed and a measured execution time of each of the nodes, an execution time of each heterogeneous computing device. In some example embodiments, the execution time analyzer 250 may analyze, based on a sum of execution times of the nodes and the edges of the neural network model, the total execution time of the neural network model. The analyzed execution time of each heterogeneous computing device may be proportional to an amount of computation of each heterogeneous computing device, and the analyzed total execution time may be proportional to a total amount of computation of the neural network model.

The error calculator 260 may acquire the actual execution time from the neural network model executor 240, and may calculate an error between target execution time of the neural network model and the actual execution time. In an example embodiment, the target execution time may be externally input.

The power profiler 230 may store an amount of power consumption according to an operating frequency level of each hardware device, and may provide the stored amount of power consumption to the operating frequency decomposer 220. Even when the hardware devices have a preset operating frequency level, the hardware devices may have different amounts of power consumption in a utilization period, a period in which computation is performed, and an idle period, an idle state. The power profiler 230 may store both an amount of power consumption in the utilization period and an amount of power consumption in the idle period according to an operating frequency level. The power profiler 230 may determine the power consumption based on monitored power consumption. Alternatively, the power consumption may be received from an external source (e.g. based on measurements by an external device) and stored in the power profiler 230.

The feedback controller 210 may determine a normalized target performance value by performing feedback control, based on an error in execution time acquired from the error calculator 260. The normalized performance value may refer to a performance acquired by normalizing, based on an operating frequency range of each of the hardware devices, performance of the neural network computation system 200 that may vary depending on the operating frequency range. In an example embodiment, the normalized performance may have a value of "0" to "1." For example, performance of the neural network computation system 200 when each of the hardware devices operates at a lowest operating frequency level may correspond to a normalized performance value of "0," and performance of the neural network computation system 200 when each of the hardware devices operates at a highest operating frequency level may correspond to a normalized performance value of "1."

When the feedback controller 210 determines, based on the error in execution time, that the actual execution time is shorter than the target execution time, the feedback controller 210 may adjust the normalized target performance value to be lowered. When the feedback controller 210 determines that the actual execution time is longer than the target execution time, the feedback controller 210 may adjust the normalized target performance value to be raised. For example, the feedback controller 210 may adjust the normalized target performance value to be lowered when the error (e.g., difference of the target execution time and the actual execution time) is positive, and adjust the normalized target performance value to be raised when the error is negative. An increase in the normalized target performance may indicate to the operating frequency decomposer 220 a required increase in performance (e.g. a required increase in operating frequency). When the feedback controller 210 determines that the actual execution time is the same as the target execution time, the feedback controller 210 may maintain the normalized target performance value. Accordingly, the actual execution time may be controlled to be closer to the target execution time. In some example embodiments, the feedback controller 210 may greatly adjust the normalized target performance value as the error in execution time increases (that is, the amount of adjustment of the normalized target performance value may increase with increasing error).

The operating frequency decomposer 220 may determine, based on the normalized target performance value acquired from the feedback controller 210, an operating frequency level of each hardware device. For example, the neural network model may have a plurality of performance levels respectively having a normalized performance value. The operating frequency decomposer 220 may determine a target performance level close to the normalized target performance value, among the plurality of performance levels, and may select a combination of frequency levels of the hardware devices corresponding to the target performance level.

For example, the operating frequency decomposer 220 may determine, based on an amount of power consumption according to an operating frequency of each hardware device and execution time ratios of the heterogeneous computing devices analyzed by the execution time analyzer 250, a frequency level combination minimizing an amount of energy consumption while achieving the target performance level.

The operating frequency decomposer 220 may provide a control signal including the frequency level combination to the neural network model executor 240.

According to an example embodiment, the neural network computation system 200 may perform, based on the target execution time and the actual execution time of a neural network model, feedback control on operating frequencies of hardware devices executing the network model, thereby minimizing an amount of energy consumption caused by execution of the neural network model while ensuring user responsiveness.

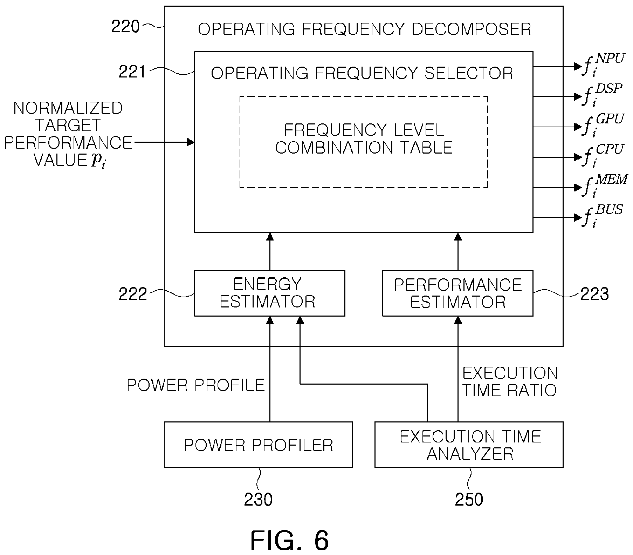

Hereinafter, a method of determining, by an operating frequency decomposer, an operating frequency according to an example embodiment will be described in more detail with reference to FIG. 6.

FIG. 6 is a diagram specifically illustrating an operating frequency decomposer of a neural network computation system, according to an example embodiment.

The operating frequency decomposer 220 may include an operating frequency selector 221, an energy estimator 222, and a performance estimator 223. The operating frequency selector 221 may acquire a target performance level (e.g. a normalized target performance value $p_i$) of a neural network model, and may find, with reference to a frequency level combination table, a frequency level combination minimizing an amount of energy consumption while achieving the normalized performance value $p_i$. In some example embodiments, the operating frequency selector 221 may output, based on the frequency level combination, operating frequency levels $f_i^{NPU}, f_i^{DSP}, f_i^{GPU}, f_i^{CPU}, f_i^{MEM}$, and $f_i^{BUS}$ of the hardware devices. The operating frequency levels, $f_i^{NPU}, f_i^{DSP}, f_i^{GPU}, f_i^{CPU}, f_i^{MEM}$, and $f_i^{BUS}$ may be operating frequency levels of the NPU, DSP, GPU, CPU, memory controller and system bus, respectively.

The operating frequency selector 221 may generate, based on a power profile of computing devices and execution time ratios of the computing devices according to the neural network model, the frequency level combination table representing a frequency level combination of the hardware devices capable of minimizing an amount of energy consumption for executing the neural network model for each performance level.

Specifically, the operating frequency selector 221 may update a combination of operating frequency levels capable of maximizing a decrease in the amount (e.g. minimize the amount) of execution time of the neural network model relative to an increasing amount of energy consumption of the neural network model while increasing a performance level of the neural network model by one level, thereby generating a frequency level combination table.

The operating frequency selector 221 may acquire an increasing amount of energy consumption from the energy estimator 222 and a decreasing amount of execution time from the performance estimator 223 so as to generate the frequency level combination table.

The energy estimator 222 may estimate, based on a power profile from the power profiler 230 and an execution time ratio of each heterogeneous computing device from the execution time analyzer 250, an increasing amount of energy consumption (e.g. an increase in energy consumption) when an operating frequency level of a computing device is increased by one level. In some example embodiments, the performance estimator 223 may estimate, based on the execution time ratio of each heterogeneous computing device from the execution time analyzer 250, a decreasing amount of execution time (e.g. a decrease in the execution time) when an operating frequency level of a computing device is increased by one level.

The operating frequency selector 221 may determine whether the decreasing amount of execution time relative to the increasing amount of energy consumption is maximizable when an operating frequency level of a computing device is increased by one level, and may increase the operating frequency level of the computing device by one level, thereby determining a frequency level combination corresponding to the performance level of the neural network model.

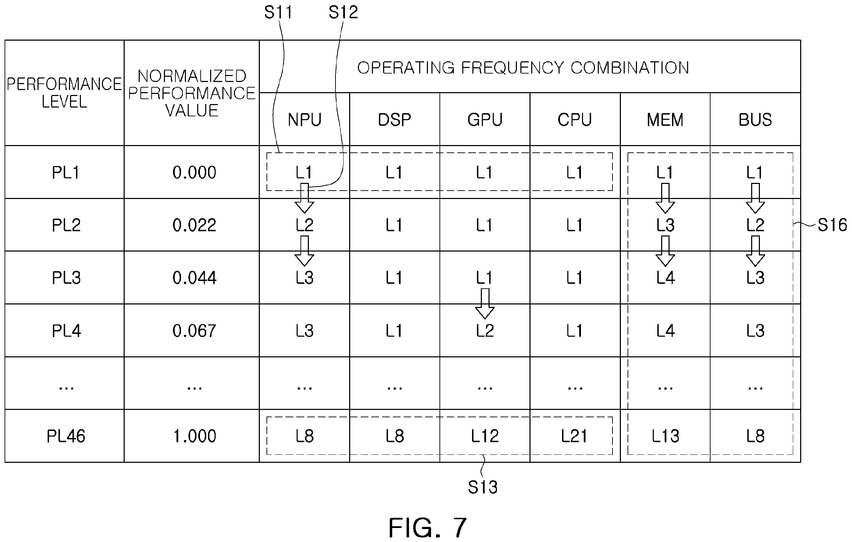

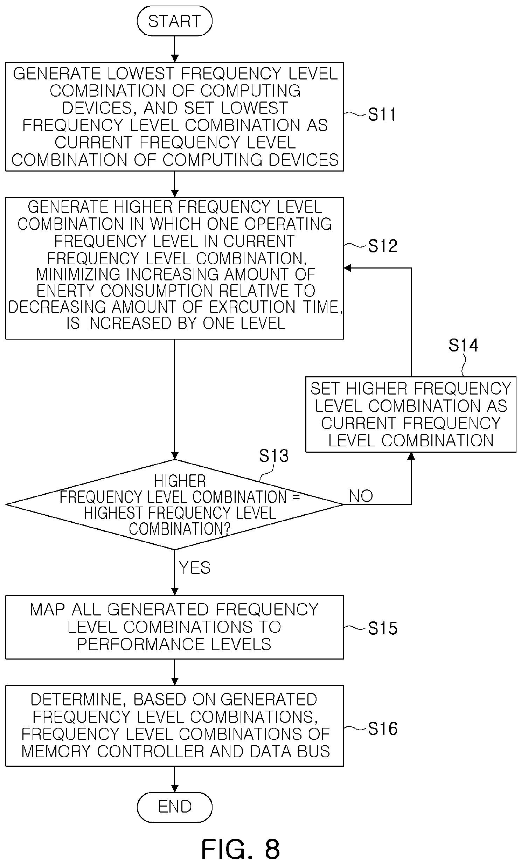

Hereinafter, a method of generating a frequency level combination table according to an example embodiment is described in detail with reference to FIGS. 7 and 8.

FIG. 7 is a diagram illustrating a frequency level combination table including a combination of operating frequency levels according to a performance level, according to an example embodiment, and FIG. 8 is a flowchart illustrating a method of finding an operating frequency combination according to a performance level, according to an example embodiment.

Referring to FIG. 7, a frequency level combination table representing operating frequency levels of hardware devices including heterogeneous computing devices according to performance levels PL1 to PL46 of a neural network model is illustrated. Specifically, operating frequency levels of heterogeneous computing devices NPU, DSP, GPU, and CPU, a memory controller MEM, and a system bus BUS are illustrated. According to an example embodiment, the NPU, DSP, GPU, CPU, the memory controller, and the system bus may correspond to the NPU 113, the DSP 114, the GPU 112, the CPU 111, the memory controller 120, and the system bus 101.

Referring to FIG. 8, the operating frequency selector 221, described with reference to FIG. 6, may perform operations S11 to S16, thereby generating the frequency level combination table described with reference to FIG. 7.

Referring to FIGS. 7 and 8, in operation S11, the operating frequency selector 221 may generate a lowest frequency level combination of computing devices, and may set the lowest frequency level combination as a current frequency level combination of the computing devices.

The lowest frequency level combination of computing devices may refer to a combination in which an operating frequency level of each of the computing devices is a minimum level. In the lowest frequency level combination, each of operating frequency levels of the computing devices NPU, DSP, GPU, and CPU may be a first level L1. The operating frequencies of the operating frequency levels for each computing device may be different. Accordingly, the minimum operating frequency (e.g. the operating frequency corresponding to the first level L1) for each computing device may be different.

In the example of FIG. 7, each of operating frequency levels of the memory controller MEM and the system bus BUS may be set as the first level L1, and a method of setting the operating frequency levels of the memory controller MEM and the system bus BUS will be described below.

In operation S12, the operating frequency selector 221 may generate a higher frequency level combination in which one operating frequency level in the current frequency level combination, minimizing an increasing amount of energy consumption relative to a decreasing amount of execution time, is increased by one level.

For example, the operating frequency selector 221 may generate a higher frequency level combination by increasing one operating frequency level, among operating frequency levels of the heterogeneous computing devices NPU, DSP, GPU, and CPU, by one level.

In order to determine an operating frequency level maximizing an decreasing amount of execution time relative to an increasing amount of energy consumption (e.g. maximizing a decrease in execution time relative to an increase in energy consumption), the operating frequency selector 221 may estimate, with respect to each of the heterogeneous computing devices NPU, DSP, GPU, and CPU, a decreasing amount of execution time and an increasing amount of energy consumption when an operating frequency level of one computing device is increased by one level. That is, the operating frequency selector 221 may estimate a decrease in execution time and an increase in energy consumption associated with increasing the operating frequency level of one computing device by one level.

For example, the decreasing amount of execution time (e.g. the amount the execution time is reduced) when an operating frequency level of a computing device p is increased by one level may be estimated based on [Equation 1] below.

[Equation 1]

$$\Delta \overline{T} = \frac{t^p}{f_{cur}^p} - \frac{t^p}{f_{high}^p}$$

In [Equation 1] above, $\Delta\overline{T}$ denotes a decreasing amount of execution time (e.g. an estimated reduction in execution time), $t^p$ denotes an execution time of the computing device p for a neural network model, analyzed by the execution time analyzer 250 described with reference to FIGS. 5 and 6, $f_{cur}^p$ denotes an operating frequency of the computing device p in a current frequency level combination, and $f_{high}^p$ denotes an operating frequency after the operating frequency level of the computing device p is increased by one level.

The execution time of the computing device p, analyzed by the execution time analyzer 250, may be proportional to an amount of computation of the computing device p for executing the neural network model. For example, the execution time of the computing device p may be analyzed by the execution time analyzer 250, based on a result of at least one-time neural network model execution (e.g. based on at least one execution of the neural network model). The analyzed execution time of the computing device p may be used as a value representing an amount of computation of the computing device p in the neural network model, and may be fixed regardless of the operating frequency of the computing device p.

The execution time of the computing device p may be determined by measuring the time it takes for the computing device p to execute respective operation(s) of the neural network model and multiplying the time by the operating frequency of the computing device p during the execution. For instance, execution times of the heterogeneous computing devices NPU, DSP, GPU and CPU may be measured by executing the neural network model when every computing device is operating at is maximum frequency level. Alternatively, the execution time of the computing device p may be equal to or proportional to time complexity of the implementation of the neural network on the computing device p. For instance, the execution time of the computing device p may be determined by parsing source codes of the neural network model, determining source codes to be executed by the computing device p, estimating execution times of the source codes executed to be executed by the computing device p, and summing the estimated execution times..

The decreasing amount of execution time of the neural network model when the operating frequency level of the computing device p is increased by one level may be determined as a difference between an execution time when the computing device p processes an amount of computation while operating at a current operating frequency and an execution time when the computing device p processes the same amount of computation while operating at an operating frequency having an one-level increased level.

The increasing amount of energy consumption when the operating frequency level of the computing device p is increased by one level may be estimated based on [Equation 2] below.

[Equation 2]

$$\Delta \overline{E^p} = \overline{E^p}\left(f_{high}^p\right) - \overline{E^p}\left(f_{cur}^p\right), where\ \overline{E^p}(f) = t^p \cdot p_{util}^p(f) + (t - t^p) \cdot p_{idle}^p(f)$$

In [Equation 2] above, $\Delta \overline{E^p}$ denotes an increasing amount of energy consumption (e.g. an estimated increase in energy consumption), $\overline{E^p}(f)$ denotes an amount of energy consumption (e.g. an estimated energy consumption) of the computing device p for an operating frequency f, $p_{util}^p$ denotes power consumed in a utilization period of the computing device p for the operating frequency f, $p_{idle}^p$ denotes power consumed in an idle period of the computing device p for the operating frequency f, $t^p$ denotes an analyzed execution time of the computing device p in the neural network model, $t$ denotes a total analyzed execution time of the neural network model, $f_{cur}^p$ denotes an operating frequency of the computing device p in a current frequency level combination, and $f_{high}^p$ denotes an operating frequency after the operating frequency level of the computing device p is increased by one level.

As described above, when the computing device p operates at the operating frequency f, power consumed in the utilization period of the computing device p may be different from power consumed in the idle period of the computing device p. Accordingly, an amount of energy consumption $\overline{E^p}(f)$ of the computing device p for the operating frequency f may be determined as a sum of an amount of energy consumption during execution time $t^p$ of the computing device p and an amount of energy consumption during idle time $t - t^p$ of the computing device p, in the neural network model.

In some example embodiments, an increasing amount of energy consumption for executing the neural network model when the operating frequency level of computing device p is increased by one level may be determined as a difference between an amount of energy consumption when the computing device p operate at an operating frequency having a one-level increased level, as indicated in Equation 2, and an amount of energy consumption when the computing device p operate at the current operating frequency.

The operating frequency selector 221 may estimate a decreasing amount of execution time relative to an increasing amount of energy consumption, that is, energy efficiency, by dividing decreasing amount of execution time by the increasing amount of energy consumption. That is, the operating frequency selector 221 may estimate a rate of change of execution time relative to energy consumption by dividing the estimated reduction in execution time by the estimated increase in energy consumption.

The operating frequency selector 221 may estimate an energy efficiency when an operating frequency level of the NPU is increased by one level in a current frequency level combination, an energy efficiency when an operating frequency level of the DSP is increased by one level in the current frequency level combination, an energy efficiency when an operating frequency level of the GPU is increased by one level in the current frequency level combination, and an energy efficiency when an operating frequency level of the CPU is increased by one level in the current frequency level combination. In some example embodiments, the operating frequency selector 221 may determine a frequency level combination having highest energy efficiency, among the estimated energy efficiencies, as a higher frequency level combination. That is, the operating frequency selector 221 may select a computing device that provides the highest energy efficiency (e.g. the greatest reduction in execution time relative to increase in energy consumption) as the computing device that has its frequency level increased for the next frequency level combination. For example, the operating frequency selector 221 may generate a higher frequency level combination by increasing the operating frequency level of the NPU from a first level L1 to a second level L2 in a current frequency level combination in which all performance levels of the NPU, DSP, GPU, and CPU are a first performance level PL1.

In operation S13, the operating frequency selector 221 may determine whether the higher frequency level combination corresponds to a highest frequency level combination. The highest frequency level combination may be a frequency level combination in which every computing device is operating at its maximum frequency level. In the example of FIG. 7, the highest frequency level combination may be a combination in which operating frequency levels of the heterogeneous computing devices NPU, DSP, GPU, and CPU are an eighth level L8, an eighth level L8, a twelfth level L12, and a twenty first level L21, respectively.

When the higher frequency level combination does not correspond to the highest frequency level combination ("No" in operation S13), the operating frequency selector 221 may set the higher frequency level combination as a current frequency level combination in operation S14, and may repeat operation S12 and operation S13.

For example, the operating frequency selector 221 may set a frequency level combination (L2, L1, L1, L1) as a current frequency level combination, and may determine, based on energy efficiency, a higher frequency level combination corresponding to a third performance level PL3 as (L3, L1, L1, L1). The operating frequency selector 221 may repeatedly perform operations S12 and S13 until the higher frequency level combination becomes (L8, L8, L12, L21), a highest frequency level combination.

When the higher frequency level combination corresponds to the highest frequency level combination ("Yes" in operation S13), the operating frequency selector 221 may map all frequency level combinations, generated in operation S15, to a plurality of performance levels.

When an operation of increasing one operating frequency level in a lowest frequency level combination is repeatedly performed to generate frequency level combinations until a highest frequency level combination is reached, 1+(8-1)+(8-1)+(12-1)+(21-1) = 46 combinations may be generated when the performance levels of the NPU, DSP, GPU, and CPU are 8, 8, 12, and 21, respectively, as illustrated in FIG. 7. The 46 combinations may be mapped to the first performance level PL 1 to a forty sixth performance level PL46 in ascending order of a sum of the operating frequency levels.

A performance level may correspond to normalized performance value of a neural network model. For example, the operating frequency selector 221 may map a normalized performance value of the first performance level PL1, corresponding to a lowest frequency level combination, to "0," and may map a normalized performance value of the forty sixth performance level PL46, corresponding to a highest frequency level combination, to "1." In some example embodiments, normalized performance value of remaining performance levels may be mapped to gradually increasing values between "0" and "1."

In an example embodiment, the operating frequency selector 221 may map, depending on the number of performance levels, the performance levels to normalized performance values set to have an equal interval therebetween. A performance difference, caused by respective frequency level combinations, may not be strictly equal, but may be approximated as being equal.

In operation S16, the operating frequency selector 221 may determine, based on the frequency level combinations of the heterogeneous computing devices, frequency level combinations of the memory controller MEM and a system bus BUS.

When operating frequencies of hardware devices, having dependence with respect to each other, are significantly different from each other due to a hardware structure, a performance bottleneck may occur. For example, when operating frequencies of the memory controller MEM and system bus BUS is significantly lower than operating frequencies of the computing devices, the memory controller MEM and system bus BUS may not rapidly acquire values generated by the computing devices, and may have difficulty rapidly providing values used by the computing devices.

According to an example embodiment, the operating frequency selector 221 may link the operating frequencies of the memory controller and the system bus to the operating frequencies of the heterogeneous computing devices. In an example embodiment, the operating frequency selector 221 may determine operating frequency levels of the memory controller MEM and the system bus BUS to be proportional to a relatively highest level, among operating frequency levels of the heterogeneous computing devices, in a frequency level combination of the heterogeneous computing devices.

For example, the numbers of operating frequency levels of the heterogeneous computing devices NPU, DSP, GPU, and CPU may be respectively 8, 8, 12, and 21, and may be different from each other. In order to compare relative magnitudes of the operating frequency levels of heterogeneous computing devices NPU, DSP, GPU, CPU to each other, the operating frequency levels may be normalized. In some example embodiments, the numbers of operating frequency levels of the memory controller MEM and the system bus BUS may also be different from each other. The operating frequency levels of the memory controller MEM and the system bus BUS may be determined as a minimum level such that normalized operating frequency levels of the memory controller MEM and the system bus BUS are not lower than a highest frequency level, among the normalized operating frequency levels.

According to an example embodiment, the operating frequency selector 221 may generate frequency level combinations having a low amount of energy consumption by repeatedly performing an operation of increasing one operating frequency level in a current frequency level combination. In the example of FIG. 7, when the numbers of operating frequency levels of the heterogeneous computing devices NPU, DSP, GPU, and CPU may be respectively 8, 8, 12, and 21, the operating frequency selector 221 may generate frequency level combinations having a low amount of energy consumption by performing (8-1)+(8-1)+(12-1)+(21-1) = 45 searches. That is, the operating frequency selector 221 may efficiently generate frequency level combinations without performing a search for all frequency level combinations of the heterogeneous computing devices, for example, 8*8*12*21=16,128 combinations. Accordingly, overhead for the operating frequency selector 221 to generate frequency level combinations for each neural network model may be reduced.

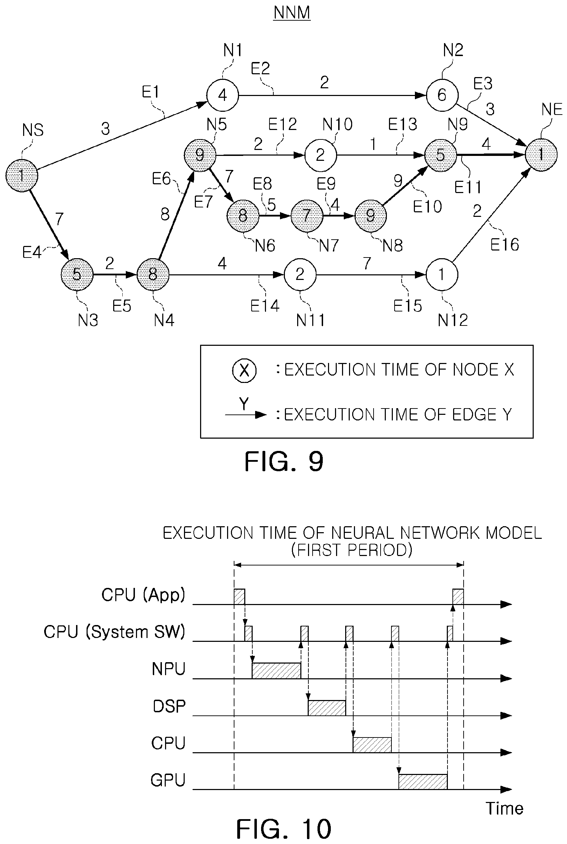

Hereinafter, a method of analyzing an execution time ratio of each computing device will be described in detail with reference to FIGS. 9 and 10.

FIG. 9 is a diagram illustrating a method of analyzing an execution time ratio using a directed acyclic graph of a neural network model, according to an example embodiment.

FIG. 9 illustrates execution time of each node and execution time of each edge in the neural network model NNM described with reference to FIG. 3. For example, execution time of a first node N1 may have a value of "4," and execution time of a first edge E1 may have a value of "3." In an example embodiment, execution time values may be relative values having an arbitrary unit.

Among a plurality of nodes NS, N1 to N12, and NE, nodes having dependence therebetween may be processed in a predetermined order. Dependence between nodes may refer to a relationship in which an output value of one node is used as an input value of another node. For example, a fifth node N5 may use an output value from a fourth node N4 as an input value. In some example embodiments, a sixth node N6 may use an output value of the fifth node N5 as each input value. That is, the fifth node N5 may have dependence on the fourth node N4, and the sixth node N6 may have dependence on the fifth node N5. The fourth to sixth nodes N4, N5, and N6 may need to be processed in an order of the fourth node N4, the fifth node N5, and the sixth node N6.

Nodes having independence may not need to be processed in a predetermined order, and may be processed in parallel. For example, the sixth node N6 and the tenth node N10 may not have a relationship in which output values of the sixth node N6 and the tenth node N10 are used as input values. Accordingly, the sixth node N6 and the tenth node N10 may be processed in any order, and may be processed in parallel.

A directed acyclic graph of a neural network model NNM may have various paths from a start node NS to an end node ES due to dependence and independence of the nodes.

The execution time of the neural network model may be dependent on the execution time of a longest path that takes a longest execution time, among various paths. For example, in an example embodiment, the execution time of the neural network model may be the same as the execution time of the longest path. According to an example embodiment, an execution time ratio of each computing device may be determined based on analysis of a longest path of the directed acyclic graph. The execution time analyzer 250, described with reference to FIG. 5, may determine, based on execution time of each node and execution time of each edge acquired from the neural network model executor 240, a longest path having a longest execution time, among various directed acyclic paths of the neural network model. In the example of FIG. 9, the longest path of the neural network model NNM is indicated with a thick line. For example, the longest path of the neural network model NNM in FIG. 9 may be NS-N3-N4-N5-N6-N7-N8-E11-NE.

FIG. 10 is a diagram illustrating execution time of a neural network model and execution time of each computing device in a longest path.

FIG. 10 illustrates execution time of each of computing devices in a first period in which a neural network model is executed, according to an example embodiment.

The execution time of each of the computing devices in the first period may be determined based on analysis of a longest path of the neural network model. For example, in an example embodiment, a computing device on which each of nodes and edges included in the longest path is executed may be determined in advance. Accordingly, the execution time of the computing device may be analyzed based on execution time of each of the nodes and edges and the computing device on which each of the nodes and edges is executed. In some example embodiments, a total execution time of the neural network model may also be analyzed.

One neural network model may have a predetermined connection structure between nodes and edges. Accordingly, a longest path of the neural network model may be the same every period in which the neural network model is executed. According to an example embodiment, a amount of reduction in execution time and an amount of the increase in energy consumption when a frequency of a computing device is increased by one level may be estimated based on execution time of each of heterogeneous computing devices and total execution time of the neural networking model analyzed based on execution results of the neural network model in the first period.

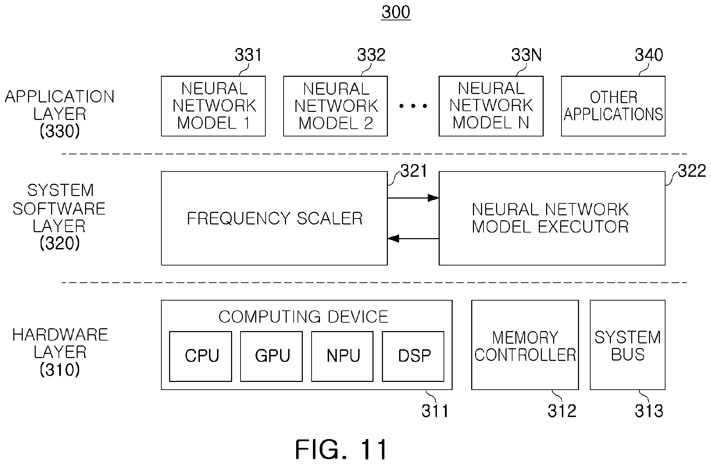

FIG. 11 is a block diagram illustrating a hierarchical structure of a neural network computation system, according to an example embodiment.

A neural network operation system 300 may have a hierarchical structure including a hardware layer 310, a system software layer 320, and an application layer 330.

The hardware layer 310, a lowermost layer of the neural network operation system 300, may include hardware devices such as a processor 311, a memory controller 312, and a system bus 313. The processor 311 may include the plurality of heterogeneous computing devices, such as a CPU, a GPU, an NPU, and a DSP. In an example embodiment, the hardware devices, included in the hardware layer 310 in FIG. 11, may correspond to the hardware devices of the neural network operation system 100 described with reference to FIG. 1. However, a memory, inputting and outputting data under control of the memory controller 312, is omitted in the example illustrated in FIG. 11.

The system software layer 320 may manage the hardware devices of the hardware layer 310, and may provide an abstracted platform. For example, the system software layer 320 may execute a kernel such as Linux.

The system software layer 320 may include a frequency scaler 321 and a neural network model executor 322. According to an example embodiment, the frequency scaler 321 may determine operating frequencies of hardware devices executing a neural network model by performing feedback control.

In some example embodiments, the neural network model executor 322 may execute the neural network model using the hardware devices operating at an operating frequency determined by the frequency scaler 321. In some example embodiments, the neural network model executor 322 may output actual execution time of the neural network model as a result of executing the neural network model. The actual execution time may be fed back to the frequency scaler 321 for closed-loop control of the frequency scaler 321.

The system software layer 320 may be executed by the processor 311. For example, system software layer 320 may be executed by the CPU. However, a computing device on which the system software layer 320 is executable is not limited to the CPU.

The application layer 330 may be executed on the system software layer 320, and may include a plurality of neural network models 331-33N and other applications 340. For example, the other applications 340 may include a camera application. In some example embodiments, the plurality of neural network models 331 to 33N may include a model detecting an object included in an image frame acquired by the camera application, a model identifying the detected object, a model detecting a target region in the image frame, a model identifying the detected target region, a model classifying the identified target regions depending on content or meaning such as a person, a car, and a tree, and the like. However, the types of neural network models 331 to 33N and the other applications 340 are not limited thereto.

According to an example embodiment, the system software layer 320 may receive feedback on an error between target execution time and actual execution time of each of the neural network models 331 to 33N in order to execute the neural network models 331 to 33N, and may control, based on the error in execution time, the operating frequencies of the hardware devices.

When a neural network model is executed, other applications may be executed simultaneously therewith, and a plurality of neural network models may be executed simultaneously therewith. For example, when the neural network operation system 300 is a mobile system, a neural network model for detecting an object may be executed simultaneously with execution of a camera application. When a plurality of applications, including the neural network model, are executed simultaneously, resource contention may occur in hardware devices.

According to an example embodiment, the system software layer 320 may adjust, based on target execution time and actual execution time of each of a plurality of neural network models, executed simultaneously, among the neural network models 331 to 33N, the operating frequencies of the hardware devices. According to an example embodiment, the neural network operation system 300 may achieve target execution time of each of the plurality of neural network models while reducing an amount of power consumption of each of the hardware devices.

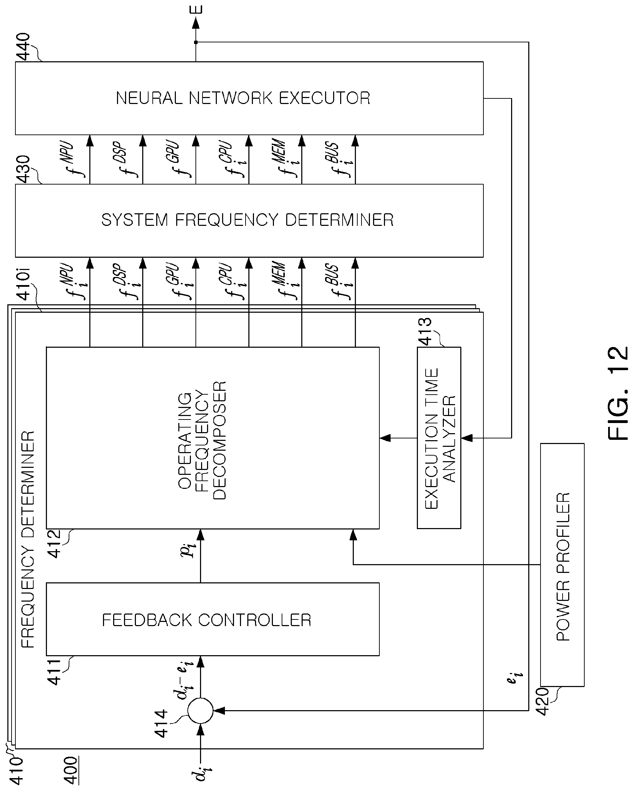

FIG. 12 is a block diagram specifically illustrating a system software layer of a neural network computation system, according to an example embodiment.

Referring to FIG. 12, a system software layer 400 may include a plurality of frequency determiners 410, a power profiler 420, a system frequency determiner 430, and a neural network model executor 440. The plurality of frequency determiners 410 may correspond to neural network models executed in the system software layer 400, respectively. FIG. 12 illustrates a frequency determiner 410i of an arbitrary neural network model $m_i$, among the neural network models being executed. The plurality of frequency determiners 410, the power profiler 420, and the system frequency determiner 430 in FIG. 12 may correspond to the frequency scaler 321 in FIG. 11, and the neural network model executor 440 in FIG. 12 may correspond to the neural network model executor 322 in FIG. 11.

Referring to FIG. 12, each of the plurality of frequency determiners 410 may output, based on an error $d_i - e_i$ between a target execution time $d_i$ and an actual execution time $e_i$ of a corresponding neural network model, operating frequencies $f_i^{NPU}, f_i^{CPU}, f_i^{GPU}, f_i^{DSP}, f_i^{MEM}$ and $f_i^{BUS}$ of each hardware device for executing the neural network model.

The power profiler 420 may store a power profile representing an amount of power consumption in a utilization period and an amount of power consumption in an idle period according to an operating frequency level of each of heterogeneous computing devices. The power profiler 420 may provide the power profile to each of the plurality of frequency determiners 410. The power profile may be used to determine the operating frequencies $f_i^{NPU}$, $f_i^{CPU}, f_i^{GPU}, f_i^{DSP}, f_i^{MEM}$, and $f_i^{BUS}$ of each hardware device.

The system frequency determiner 430 may acquire, from each of the plurality of frequency determiners 410, the operating frequencies of each hardware device for executing each neural network model. In some example embodiments, the system frequency determiner 430 may output system operating frequencies $f^{NPU}$, $f^{CPU}$, $f^{GPU}$, $f^{DSP}$, $f^{MEM}$, and $f^{BUS}$ of each hardware device for simultaneously executing a plurality of neural network models, including the neural network model $m_i$.

According to an example embodiment, the system frequency determiner 430 may determine an operating frequency having a highest value, among the operating frequencies of each hardware device acquired from the plurality of frequency determiners 410, as a system operating frequency of each hardware device. For example, the system frequency determiner 430 may determine an operating frequency having a highest value, among operating frequencies of an NPU acquired from each of the plurality of frequency determiners 410, as a system operating frequency of the NPU.

The neural network model executor 440 may control, based on the system operating frequency acquired from the system frequency determiner 430, operating frequencies of the hardware devices, and may execute a plurality of neural network models using the hardware devices. The neural network model executor 440 may output execution time E of the plurality of neural network models.

The frequency determiner 410i of the neural network model $m_i$ may include a feedback controller 411, an operating frequency decomposer 412, an execution time analyzer 413, and an error calculator 414. The feedback controller 411, the operating frequency decomposer 412, the execution time analyzer 413, and the error calculator 414 in FIG. 12 may correspond to the feedback controller 210, the operating frequency decomposer 220, the execution time analyzer 250, and the error calculator 260 described with reference to FIG. 5.

The feedback controller 411 may output a normalized target performance value $p_i$ of the neural network model $m_i$ by performing, based on the error $d_i - e_i$ in execution time of the neural network model $m_i$ calculated by the error calculator 414, feedback control. In an example embodiment, the feedback controller 411 may perform proportional-integral-differential (PID) control, thereby reducing sudden changes in the normalized target performance value $p_i$ and improving stability.

A target execution time of the neural network model $m_i$ may be determined in advance. For example, a device driver, controlling hardware devices, may provide an application programming interface (API) capable of setting a target execution time for each neural network model. The target execution time for each neural network model may be input via the API.

In some example embodiments, the feedback controller 411 may determine an initial value of a normalized target performance value of a neural network model to be "1." That is, the feedback controller 411 may control each of hardware devices to operate according to a highest operating frequency when the neural network model is first executed, thereby guaranteeing responsiveness. In some example embodiments, the feedback controller 411 may adjust, based on actual execution time shorter than target execution time, the normalized target performance value to be lowered, and may control the actual execution time to converge to the target execution time.

The operating frequency decomposer 412 may output, based on the normalized target performance value $p_i$ output by the feedback controller 411, operating frequency levels $f_i^{NPU}, f_i^{DSP}, f_i^{GPU}, f_i^{CPU}, f_i^{MEM}$, and $f_i^{BUS}$ of each hardware device for executing the neural network model $m_i$. The operating frequency decomposer 412 may determine an operating frequency of each hardware device with reference to the frequency level combination table described with reference to FIGS. 6 and 7. For example, the operating frequency decomposer 412 may determine a frequency level combination corresponding to a lowest level, among performance levels having normalized performance value not lower than (e.g. greater than or equal to) the normalized target performance value $p_i$, and may output the operating frequency levels $f_i^{NPU}$, $f_i^{DSP}$, $f_i^{GPU}$, $f_i^{CPU}$, $f_i^{MEM}$, and $f_i^{BUS}$ of each device corresponding to the frequency level combination.

The operating frequency decomposer 412 may generate, based on at least one result of executing the neural network model $m_i$, a frequency level combination table for the neural network model $m_i$. For example, the operating frequency decomposer 412 may analyze, based on an execution time for each node and an execution time for each edge from the execution time analyzer 413, execution time ratios of heterogeneous computing devices corresponding to an amount of computation of the heterogeneous computing devices for executing the neural network model $m_i$. In some example embodiments, the operating frequency decomposer 412 may generate, based on the execution time ratios and a power profile acquired from the power profiler 420, frequency level combinations capable of lowering an amount of energy consumption for executing the neural network model $m_i$ for each performance level.

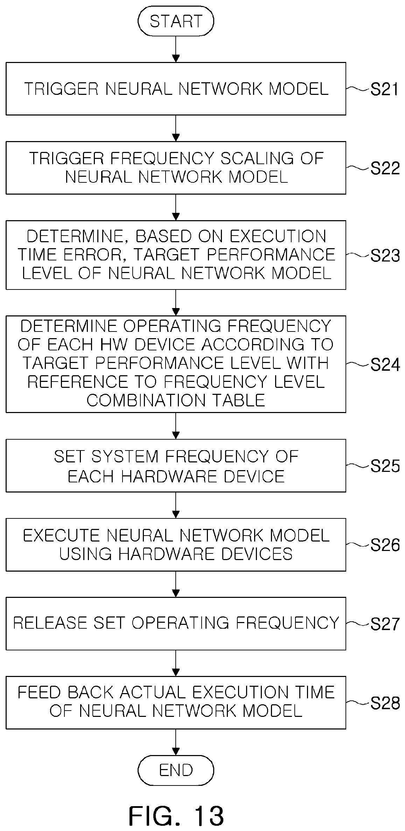

FIG. 13 is a diagram illustrating a method of executing a neural network model, according to an example embodiment.

A neural network model execution method may include operations S21 to S28, and operations S21 to S28 may be performed by the system software layer 400 of the neural network operation system described with reference to FIG. 12.

In operation S21, a neural network model may be triggered. For example, when a camera application is executed by selection of a user, the neural network model, detecting an object, may be triggered.

In operation S22, frequency scaling of the triggered neural network model may be triggered. For example, when the neural network model $m_i$ is triggered, the frequency determiner 410i of the neural network model $m_i$, described with reference to FIG. 12, may be triggered together therewith. A frequency determiner may be triggered independently for each neural network model. For example, in a state in which a frequency determiner of another neural network model is executed, the frequency determiner for the other neural network model may be further triggered.

In operation S23, target performance of the neural network model may be determined based on a previous execution time error. For example, the feedback controller 411 may determine, based on a target execution time and a previous execution time of the neural network model, an execution time error, and determine, based on the execution time error, the target performance of the neural network model.

In operation S24, an operating frequency of each hardware device according to the target performance level may be determined with reference to a frequency level combination table. For example, the operating frequency decomposer 412 may generate frequency level combinations capable of maximizing a decrease in the amount of execution time (e.g. minimize execution time) relative to an increasing amount of energy consumption (e.g. relative to increased energy consumption) each time a performance level is increased by one level, and may determine the operating frequency level of each hardware device according to the target performance level.

In operation S25, a system operating frequency of each hardware device may be determined based on operating frequencies of neural network models being executed for each hardware device, including the triggered neural network model. For example, the system frequency determiner 430 may set, as the system frequency, an operating frequency having a maximum value, among the operating frequencies of neural network models being executed with respect to each of hardware devices.

In operation S26, the triggered neural network model may be executed by driving the hardware devices according to the set system operating frequency above.

In operation S27, when execution of the triggered neural network model is completed, the set operating frequency may be released. Releasing the set operating frequency may include initializing operating frequencies of the hardware devices or restoring the operating frequencies to operating frequencies before the neural network model is executed.

In operation S28, actual execution time of the neural network model may be fed back. Normalized performance value and an operating frequency of the neural network model may be adjusted based on the actual execution time of the neural network model. The adjusted operating frequency may be used the next time the same neural network model is triggered.

According to an example embodiment, a neural network operation system may perform feedback control, based on a target execution time of a neural network model and an actual execution time of the neural network model, thereby optimizing an operating frequency of each hardware device. Each of hardware devices may operate at the optimized operating frequency to process one or more neural network models, thereby reducing an amount of energy consumption for execution of the neural network model while maintaining the target execution time of the neural network model.

The execution time of a neural network model may vary due to various factors. A wide variation in operating frequency of each hardware device may make it difficult for the actual execution time to converge to the target execution time. According to an example embodiment, in order to mitigate the variation in operating frequency of each hardware device, a smoothing technique may be applied in addition to the feedback controller 411 performing PID control.

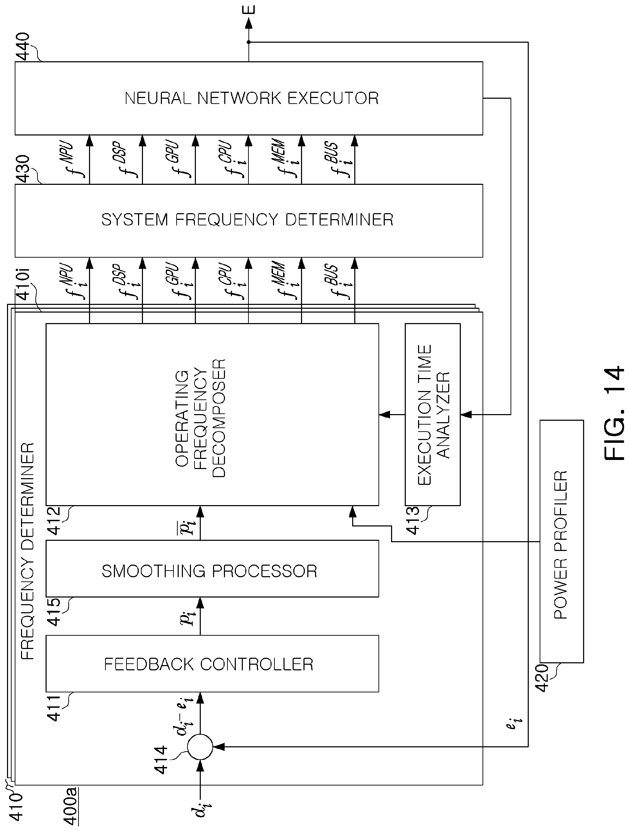

FIG. 14 is a diagram illustrating a neural network computation system, according to an example embodiment.

A neural network operation system 400a in FIG. 14 may include components similar to those of the neural network operation system 400 described with reference to FIG. 12 and thus repeated description thereof will be omitted for conciseness. Hereinafter, the neural network operation system 400a in FIG. 14 will be described based on differences from the neural network operation system 400 in FIG. 12.

Unlike the plurality of frequency processors 410 in FIG. 12, each of a plurality of frequency processors 410 in FIG. 14 may further include a smoothing processor 415. The smoothing processor 415 may output a smoothed target performance $\bar{p}_i$ by performing a smoothing operation on a normalized target performance value $p_i$ of a neural network model $m_i$, output by a feedback controller 411. The smoothed target performance may be input to an operating frequency decomposer 412.

The smoothing processor 415 may determine, based on an exponential smoothing technique for normalized target performance values determined when a previous neural network model is executed, a smoothed target performance value. Specifically, the smoothed target performance value may be determined based on a weighted average value for previously determined normalized target performance values. Among the normalized target performance values, older values may be given a smaller weight, and recent values may be given a greater weight. A weight may be determined based on a parameter having a value between "0" and "1."

In some example embodiments, the plurality of frequency estimators 410 may allow an operating frequency of each hardware device to be gradually changed, thereby controlling actual execution time of a neural network model to converge to target execution time of the neural network model.

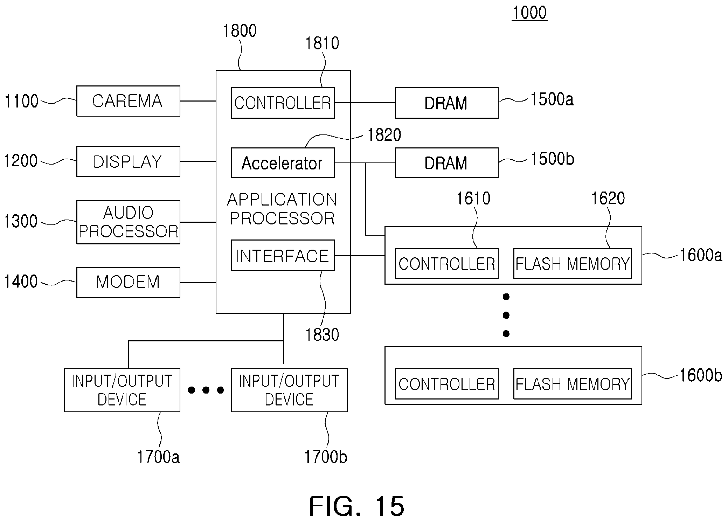

FIG. 15 is a diagram illustrating an electronic device to which a neural network computation system according to an example embodiment is applied.

Referring to FIG. 15, a mobile system 1000 may include a camera 1100, a display 1200, an audio processor 1300, a modem 1400, DRAMs 1500a and 1500b, flash memory devices 1600a and 1600b, input/output devices 1700a and 1700b, and an application processor (hereinafter "AP") 1800.

The mobile system 1000 may be implemented as a laptop computer, a portable terminal, a smartphone, a tablet PC, a wearable device, a healthcare device, an Internet-of-Things (IoT) device, or the like. In some example embodiments, the mobile system 1000 may be implemented as a server or a personal computer.

The camera 1100 may capture a still image or a video under user control. The mobile system 1000 may acquire specific information using the still image/video captured by the camera 1100, or convert the still image/video into other forms of data such as text and the like, and may store the converted data. In some example embodiments, the mobile system 1000 may recognize a character string included in the still image/video captured by the camera 1100 and provide a text or audio translation corresponding to the character string. As described, an application field of the camera 1100 in the mobile system 1000 has been increasingly diversified. In an example embodiment, the camera 1100 may transmit data such as the still image/video to the AP 1800 via a D-Phy or C-Phy interface according to an MIPI standard.

The display 1200 may be implemented in various forms, such as a liquid crystal display (LCD), an organic light emitting diode (OLED) display, an active-matrix organic light-emitting diode (AM-OLED), a plasma display panel (PDP), a field emission display (FED), electronic paper, or the like. In an example embodiment, the display 1200 may provide a touch screen function, and accordingly may also be used as an input device for the mobile system 1000. In some example embodiments, the display 1200 may be integrated with a fingerprint sensor, and accordingly may provide a security function for the mobile system 1000. In an example embodiment, the AP 1800 may transmit image data to be displayed on the display 1200 to the display 1200 via the D-Phy or C-Phy interface according to the MIPI standard.

The audio processor 1300 may process audio data, stored in the flash memory devices 1600a and 1600b, or audio data, included in a content received externally via the modem 1400 or the input/output devices 1700a and 1700b. For example, the audio processor 1300 may perform various processing, such as coding/decoding, amplification, noise filtering, and the like, on audio data.

The modem 1400 may modulate and transmit a signal to transmit and receive wired/wireless data, and may restore an original signal by demodulating an externally received signal. The input/output devices 1700a and 1700b, devices providing digital input and output, may include a port connectable to an external recording medium, an input device such as a touch screen or a mechanical button key, and an output device capable of outputting vibrations in a haptic manner. In some examples, the input/output devices 1700a and 1700b may be connected to an external recording medium via a port such as a USB, a lightning cable, an SD card, a micro SD card, a DVD, a network adapter, or the like.

The AP 1800 may control an overall operation of the mobile system 1000. Specifically, the AP 1800 may control the display 1200 such that part of a content stored in the flash memory devices 1600a and 1600b is displayed on a screen. In some example embodiments, when a user input is received via the input/output devices 1700a and 1700b, the AP 1800 may perform a control operation corresponding to the user input.

The AP 1800 may be provided as a system-on-chip (hereinafter "SoC"), running an application program, an operating system (OS), or the like. In some example embodiments, the AP 1800 may be included in a single semiconductor package, together with other devices included in the mobile system 1000, such as the DRAM 1500a, a flash memory 1620, and/or a memory controller 1610. For example, at least one device, different from the AP 1800, may be provided in the form of a package such as a package-on-package (PoP), a ball grid array (BGA), a chip-scale package (CSP), a system in package (SIP), a multi-chip package (MCP), a wafer-level fabricated package (WFP), a wafer-level processed stack package (WSP), or the like. A kernel of the OS, running on the AP 1800, may include an input/output (I/O) scheduler and a device driver for controlling the flash memory devices 1600a and 1600b. The device driver may control access performance of the flash memory devices 1600a and 1600b with reference to the number of synchronous queues managed by the input/output scheduler, or may control a CPU mode, a dynamic voltage and frequency scaling (DVFS) level, or the like in the SoC.

In an example embodiment, the AP 1800 may include a processor block executing computation or running an application program and/or an OS, and various other peripheral components connected to the processor block via a system bus. The peripheral components may include a memory controller, an internal memory, a power management block, an error detection block, a monitoring block, and the like. The processor block may include one or more cores. When the processor block includes a plurality of cores, each of the cores may include a cache memory, and a common cache, shared by the cores, may be included in the processor block.

In an example embodiment, the AP 1800 may include an accelerator block 1820, a dedicated circuit for AI data computation. In some example embodiments, an accelerator chip may be provided separately from the AP 1800, and the DRAM 1500b may be additionally connected to the accelerator block 1820 or the accelerator chip. The accelerator block 1820, a functional block specializing in performing a specific function of the AP 1800, may include a graphics processing unit (GPU), i.e., a functional block specializing in graphic data processing, a neural processing unit (NPU), i.e., a block specializing in performing AI calculation and inference, and/or a data processing unit (DPU), i.e., a block specializing in data transmission.

In some example embodiments, the mobile system 1000 may include a plurality of DRAMs 1500a and 1500b. In an example embodiment, the AP 1800 may include a controller 1810 for controlling the DRAM 1500a and 1500b, and the DRAM 1500a may be directly connected to the AP 1800.

The AP 1800 may control a DRAM by setting a command and a mode register set (MRS) meeting a JEDEC standard, or may perform control by setting a specification and a function used by the mobile system 1000, such as low voltage/high speed/reliability, and a DRAM interface protocol for CRC/ECC. For example, the AP 1800 may communicate with the DRAM 1500a via an interface meeting the JEDEC standard, such as LPDDR4, LPDDR5, or the like. In some example embodiments, the AP 1800 may perform control by setting a new DRAM interface protocol, such that the accelerator block 1820 or the accelerator chip, provided separately from the AP 1800, may control the DRAM 1500b for an accelerator having a bandwidth higher than that of the DRAM 1500a.

FIG. 15 illustrates only the DRAMs 1500a and 1500b, but components of the mobile system 1000 are not necessarily limited thereto. Depending on a bandwidth, a response speed, and a voltage condition of the AP 1800 or the accelerator block 1820, memories other than the DRAM 1500a and 1500b may also be included in the mobile system 1000. For example, the controller 1810 and/or the accelerator block 1820 may control various memories such as a PRAM, an SRAM, an MRAM, an RRAM, an FRAM, a hybrid RAM, and the like. The DRAMs 1500a and 1500b may have latency relatively lower than that of the input/output devices 1700a and 1700b or the flash memory devices 1600a and 1600b, and may have a bandwidth higher than that of the input/output devices 1700a and 1700b or the flash memory devices 1600a and 1600b. The DRAMs 1500a and 1500b may be initialized at a point in time at which the mobile system 1000 is powered on. When an OS and application data are loaded, the DRAMs 1500a and 1500b may be used as a temporary storage position for the OS and the application data, or as an execution space for various software codes.

In the DRAMs 1500a and 1500b, four arithmetic operations such as addition, subtraction, multiplication, and division, a vector operation, an address operation, or a fast Fourier transform (FFT) operation data may be stored. In an example embodiment, the DRAMs 1500a and 1500b may be provided as processing in memory (PIM) having a computation function. For example, a function used for inference may be performed in the DRAMs 1500a and 1500b. Here, inference may be performed in a deep learning algorithm using an artificial neural network. The deep learning algorithm may include a training operation of learning a model via various pieces of data, and an inference operation of recognizing data with the learned model. For example, the function used for inference may include a hyperbolic tangent function, a sigmoid function, a rectified linear unit (ReLU) function, and the like.

In an example embodiment, an image, captured by a user using the camera 1100, may be signal-processed and stored in the DRAM 1500b, and the accelerator block 1820 or the accelerator chip may perform AI data computation recognizing data, using data stored in the DRAM 1500b and a function used for inference.

In an example embodiment, the mobile system 1000 may include a plurality of storage devices or a plurality of flash memory devices 1600a and 1600b having a capacity greater than that of the DRAM 1500a and 1500b. The flash memory devices 1600a and 1600b may include a controller 1610 and a flash memory 1620. The controller 1610 may receive a control command and data from the AP 1800, and may write, in response to the control command, data to the flash memory 1620, or may read data stored in the flash memory 1620 and transmit the data to the AP 1800.

In some example embodiments, the accelerator block 1820 or the accelerator chip may perform a training operation and AI data computation using the flash memory devices 1600a and 1600b. In an example embodiment, a block capable of executing a predetermined computation may be implemented in the flash memory devices 1600a and 1600b, and the block may instead execute at least part of the training operation and inference AI data computation, performed by the AP 1800 and/or the accelerator block 1820, using data stored in the flash memory 1620.

In an example embodiment, the AP 1800 may include an interface 1830, such that the flash memory devices 1600a and 1600b may be directly connected to the AP 1800. For example, the AP 1800 may be implemented as an SoC, the flash memory device 1600a may be implemented as a separate chip from the AP 1800, and the AP 1800 and the flash memory device 1600a may be mounted in a single package. However, example embodiments are not limited thereto, and in some example embodiments, the plurality of flash memory devices 1600a and 1600b may be electrically connected to the mobile system 1000 via a connection.

The flash memory devices 1600a and 1600b may store data such as a still image captured by the camera 1100 or a video shot by the camera 1100, or may store data received via a communication network and/or a port included in the input/output devices 1700a and 1700b. For example, the flash memory devices 1600a and 1600b may store augmented reality/virtual reality, high definition (HD), or ultra-high definition (UHD) content.

According to an example embodiment, the AP 1800 may abstract the camera 1100 and run a camera application allowing a user to use the camera 1100. The AP 1800 may execute a neural network model detecting an object in an image frame generated by the camera application, a neural network model determining the object, or the like, simultaneously with execution of the cameral application.

The neural network model may be executed by heterogeneous computing devices included in the AP 1800. Each of the heterogeneous computing devices may have a plurality of operating frequency levels. The AP 1800 may control each of one or more neural network models executed using the heterogeneous computing devices to have one performance level, among a plurality of performance levels.

Specifically, the AP 1800 may generate a frequency level combination table representing frequency level combinations of hardware devices including the heterogeneous computing devices, the frequency level combinations maximizing a decreasing amount of execution time relative to an increasing amount of energy consumption when a performance level of the neural network model is increased by one level. For example, the AP 1800 may estimate the increasing amount of energy consumption relative to the decreasing amount of execution time, based on a power profile of each heterogeneous computing device and a ratio of execution time of each heterogeneous computing device analyzed based on a result of at least one-time execution of the neural network model.

The AP 1800 may determine a target performance level, among the performance levels, by performing, based on an error between a target execution time and an actual execution time of the neural network model, feedback control, may select a frequency level combination of the hardware devices with reference to the frequency combination table, and may control the hardware devices to have operating frequency levels included in the frequency level combination while the neural network model is executed.

According to an example embodiment, the AP 1800 may improve energy efficiency for executing the neural network model while maintaining the target execution time of the neural network model. In some example embodiments, the AP 1800 may use a heuristic technique without searching all possible combinations to find the frequency level combinations, thereby reducing system overhead.

According to example embodiments, a neural network computing system may determine a target performance level of a neural network model by performing feedback control based on an error between a target execution time and an actual execution time of the neural network model, and may select an operating frequency combination of heterogeneous computing devices capable of maximizing energy efficiency to achieve the target performance level. As a result, the neural network computation system may improve energy efficiency for executing the neural network model while maintaining the target execution time of the neural network model.

The neural network computing system may use a heuristic technique to find the operating frequency combination of heterogeneous computing devices capable of maximizing energy efficiency to achieve the target performance level in the neural network model, and thus may determine an operating frequency of each hardware device without causing excessive overhead of the system.

While the above embodiments discuss generating a frequency level combination table by sequentially increasing a performance level by one from a minimum level (e.g. 1) to a maximum level, and selecting frequency level combinations that maximize a decrease in the amount of execution time relative to an increase in the amount of energy consumption when the performance level of the neural network model is increased by one level, alternative embodiments may operate in reverse, decreasing the performance level from a maximum level to a minimum level, and selecting frequency level combinations that maximize an increase in the amount of execution time relative to a decrease in the amount of energy consumption when the performance level of the neural network model is decrease by one level. For instance, for a given performance level (up until the lowest performance level), a lower frequency level combination may be generated in which one operating frequency level in the current frequency level combination, that maximizes the change (i.e. decrease) in the amount of energy consumption relative to the change (i.e. increase) in execution time, is decreased by one level. This can be achieved by decreasing each operating frequency for each computing device by one level and determining the most energy efficient change (that change that maximizes the decrease in the amount of energy consumption relative to increasing execution time). The embodiments described here may therefore determine, for a given performance level, a changed frequency level combination which one operating frequency level in the current frequency level combination, that maximizes the change in the amount of energy consumption relative to the change in execution time, is changed (e.g. increased or decreased) by one level.

Embodiments are set out in the following Clauses:

Clause 1. A neural network computing system comprising:

a processor including a plurality of heterogeneous computing devices, each having a plurality of operating frequency levels; and
a memory configured to store data associated with execution of a neural network model,
wherein the processor is configured to:

generate a lowest frequency level combination of the plurality of heterogeneous computing devices for executing the neural network model, and setting the lowest frequency level combination as a current frequency level combination of the plurality of heterogeneous computing devices;

generate a higher frequency level combination in which one operating frequency level that maximizes a decreasing amount of execution time relative to an increasing amount of energy consumption, among the plurality of operating frequency levels included in a current frequency level combination, is increased by one level;

repeatedly set the higher frequency level combination as the current frequency level combination and generating the higher frequency level combination, until the higher frequency level combination corresponds to a highest frequency level combination of the plurality of heterogeneous computing devices;

map the frequency level combinations that are generated to a plurality of performance levels of the neural network model;

determine a target performance level, among the plurality of performance levels, by performing feedback control based on an error between a target execution time of the neural network model and an actual execution time of the neural network model; and

control operating frequencies of the plurality of heterogeneous computing devices such that the plurality of heterogeneous computing devices have a frequency level combination corresponding to the target performance level.

Clause 2. The neural network computing system of Clause 1, wherein the processor generates the higher frequency level combination by:

analyzing an execution time ratio of each of the plurality of heterogeneous computing devices according to a previous execution result of the neural network model;

performing, on the plurality of heterogeneous computing devices, an operation of increasing an operating frequency level of one heterogeneous computing device, among the plurality of heterogeneous computing devices, by one level, and calculating, based on an execution time ratio of the one heterogeneous computing device, the decreasing amount of execution time relative to the increasing amount of energy consumption before and after the operating frequency level is increased by one level; and

determining, as the higher frequency level combination, a frequency level combination in which an operating frequency level of the one heterogeneous computing device that maximizes the amount of decreased execution time relative to the amount of increased energy consumption is increased by one level.

Clause 3. The neural network computing system of Clause 2, wherein the processor is further configured to: determine, based on an execution time of each of the plurality of heterogeneous computing devices in a longest path, among a plurality of paths of a directed acyclic graph included in the neural network model, the execution time ratio of each of the plurality of heterogeneous computing devices.

Clause 4. A neural network computing system comprising:

a processor including a plurality of heterogeneous computing devices, each having a plurality of operating frequency levels;
a memory configured to store data associated with execution of a neural network model;
a memory controller configured to control data input and output of the memory; and
a system bus configured to support communication between the processor and the memory controller,
wherein the processor is configured to:

trigger, in response to a trigger of the neural network model, frequency scaling of the neural network model;
determine, based on an error between a target execution time of the neural network model and an actual execution time of the neural network model, a target performance level of the neural network model;
determine, with reference to a frequency level combination table including an operating frequency combination of a plurality of hardware devices for executing the neural network model according to a performance level of the neural network model, an operating frequency of each of the hardware devices according to the target performance level;
set, based on operating frequencies of each of the plurality of heterogeneous computing devices of a plurality of neural network models currently being executed, including the neural network model, a system frequency of each of the hardware devices; and
execute the neural network model according to the system frequency of each of the hardware devices,

wherein the frequency level combination table includes a combination of the plurality of operating frequency levels of the plurality of hardware devices that maximize a decreasing amount of execution time relative to an increasing amount of energy consumption when the performance level of the neural network model is increased by one level, with respect to performance levels of the neural network model.

Clause 5. The neural network computing system of Clause 4, wherein the processor further configured to:
release the system frequency that is set for each of the plurality of heterogeneous computing devices when execution of the neural network model is completed.

Clause 6. The neural network computing system of Clause 4 or Clause 5, wherein the processor further configured to:
perform feedback on the actual execution time of the neural network model after the executing the neural network model is performed.

While example embodiments have been shown and described above with reference to the drawings, it will be apparent to those skilled in the art that modifications and variations could be made without departing from the scope of the present inventive concept as defined by the appended claims.

**Claims**

1.  A neural network computing system comprising:

    a processor including a plurality of heterogeneous computing devices, each having a plurality of operating frequency levels;
    a memory configured to store data associated with execution of a neural network model;
    a memory controller configured to control data input and output of the memory; and
    a system bus configured to support communication between the processor and the memory controller,
    wherein the processor is configured to:

    generate a frequency level combination table representing a plurality of frequency level combinations of hardware devices, with respect to a plurality of performance levels of the neural network model, the hardware devices including the memory controller, the system bus, and the plurality of heterogeneous computing devices, and each of the plurality of frequency level combinations maximizing a decreasing amount of execution time relative to an increasing amount of energy consumption when a performance level of the neural network model is increased by one level;
    determine a normalized performance value by performing feedback control based on an error between a target execution time of the neural network model and an actual execution time of the neural network model;
    determine, based on the normalized performance value, a target performance level, among the plurality of performance levels;
    select a frequency level combination among the plurality of frequency level combinations according to the target performance level with reference to the frequency level combination table; and
    control, based on a frequency level combination that is selected, the hardware devices while the neural network model is executed.

2.  The neural network computing system of claim 1, wherein the processor is configured to:

    repeatedly generate a higher frequency level combination in which an operating frequency level of one computing device that maximizes the decreasing amount of execution time relative to the increasing amount of energy consumption among the plurality of heterogeneous computing device, among plurality of operating frequency levels included in a current frequency level combination of the plurality of heterogeneous computing devices, is increased by one level, from when the current frequency level combination is a lowest frequency level combination until the higher frequency level combination is a highest frequency level combination;
    map the frequency level combinations that are generated to the plurality of performance levels of the neural network model; and
    generate the frequency level combination table by determining, based on the frequency level combinations that are generated, frequency level combinations of the memory controller and the system bus.

3.  The neural network computing system of claim 2, wherein the processor is configured to determine, based on an analyzed execution time of the one computing device and operating frequencies before and after increasing the operating frequency level of the one computing device by one level, the decreasing amount of execution time of the higher frequency level combination relative to the current frequency level combination, in the neural network model.

4. The neural network computing system of claim 3, wherein the processor is configured to determine, based on Equation 1 below, the decreasing amount of execution time:

[Equation 1]

$$\Delta T = \frac{t^p}{f^p_{cur}} - \frac{t^p}{f^p_{high}}$$

wherein $\Delta T$ denotes the decreasing amount of execution time, p denotes the one computing device, $t^p$ denotes an execution time analyzed with respect to the neural network model of the one computing device, $f^p_{cur}$ denotes an operating frequency before the operating frequency level of the one computing device is increased by one level, and $f^p_{high}$ denotes an operating frequency after the operating frequency level of the one computing device is increased by one level.

5. The neural network computing system of any of claims 2-4, wherein the processor is configured to determine, based on an analyzed execution time of each of the plurality of heterogeneous computing devices, operating frequencies before and after increasing the operating frequency level of the one computing device by one level, and an amount of power consumption according to the operating frequencies in each of a utilization period and an idle period of the one computing device, the increasing amount of energy consumption of the higher frequency level combination relative to the current frequency level combination, in the neural network model.

6. The neural network computing system of claim 5, wherein the processor is configured to determine, based on Equation 2 below, the increasing amount of energy consumption:

[Equation 2]

$$\Delta \overline{E^p} = \overline{E^p}\left(f^p_{cur}\right) - \overline{E^p}\left(f^p_{high}\right), where\ \overline{E^p}(f) = t^p \cdot p^p_{util}(f) + (t - t^p) \cdot p^p_{idle}(f)$$

wherein $\Delta\overline{E^p}$ denotes the increasing amount of energy consumption, $\overline{E^p}(f)$ denotes an amount of energy consumption of the one computing device for an operating frequency f, $p^p_{util}$ denotes a power consumed in the utilization period of the one computing device for the operating frequency f, $p^p_{idle}$ denotes a power consumed in the idle period of the one computing device for the operating frequency f, $t^p$ denotes an analyzed execution time of the one computing device in the neural network model, $t$ denotes a total analyzed execution time of the neural network model, $f^p_{cur}$ denotes an operating frequency before the operating frequency level of the one computing device is increased by one level, and $f^p_{high}$ denotes an operating frequency after the operating frequency level of the one computing device is increased by one level.

7. The neural network computing system of any of claims 2-6, wherein the processor is configured to:

map the highest frequency level combination to a normalized performance value "1";
map the lowest frequency level combination to a normalized performance value "0"; and
map remaining frequency level combinations to normalized performance values having an equal interval therebetween between "0" and "1" in ascending order of performance.

8. The neural network computing system of any of claims 2-7, wherein the processor is configured to determine an operating frequency level of the memory controller and an operating frequency level of the system bus to be proportional to a relatively highest level, among the plurality of operating frequency levels of the plurality of heterogeneous computing devices.

9. The neural network computing system of any preceding claim, wherein the processor is configured to:

determine a plurality of frequency level combinations of each of the hardware devices with respect to each of a plurality of neural network models executed together with the neural network model;
determine a frequency having a maximum level, among a plurality of operating frequency levels for each of the plurality of neural network models, as a system frequency with respect to each of the hardware devices; and control each of the hardware devices to operate at the system frequency.

10. The neural network computing system of claim 9, wherein

the processor is configured to further execute a camera application that generates an image frame, and the plurality of neural network models include at least two models, among a model for detecting an object in the image frame, a model for identifying the object, a model for detecting a target region in the image frame, a model for identifying the target region that is detected, and a model for classifying the target region that has been identified.

11. The neural network computing system of any preceding claim, wherein the processor is configured to perform feedback on the actual execution time of the neural network model when execution of the neural network model is completed.

12. The neural network computing system of any preceding claim, wherein the processor is configured to:

determine a smoothed target performance level by performing smoothing on the target performance level of the neural network model and a plurality of previously determined target performance levels of the neural network model; and select a frequency level combination of the plurality of heterogeneous computing devices, using the smoothed target performance level as the target performance level of the neural network model.

13. The neural network computing system of any preceding claim, wherein the heterogeneous computing devices include a central processing unit, a neural processing unit, a graphic processing unit, and a digital signal processor.

14. The neural network computing system of any preceding claim, wherein the processor is configured to receive the target execution time of the neural network model via an application programming interface.

15. The neural network computing system of any preceding claim, wherein the processor is configured to:
trigger the determining the normalized performance value, the determining a target performance level, and the selecting the frequency level, and the controlling the hardware devices, in response to a trigger of the neural network model.

FIG. 1

FIG. 2

EP 4 614 324 A1

| | NPU OPERATING FREQUENCY LEVEL CHANGE (MHz) | | | | | |
|---|---|---|---|---|---|---|
| | 160→267 | 267→332 | 332→533 | 533→663 | 663→800 | 800→935 |
| DECREASING AMOUNT OF AVERAGE EXECUTION TIME (A) | 10430ms | 3474ms | 5318ms | 1582ms | 1109ms | 764ms |
| INCREASING AMOUNT OF AVERAGE POWER CONSUMPTION (B) | 185mW | 94mW | 399mW | 251mW | 427mW | 421mW |
| A/B | 56.4 | 36.8 | 13.3 | 6.3 | 2.6 | 1.8 |

FIG. 3

NNM

FIG. 4

FIG. 5

220～ OPERATING FREQUENCY DECOMPOSER

221～ OPERATING FREQUENCY SELECTOR

NORMALIZED
TARGET
PERFORMANCE
VALUE $p_i$

FREQUENCY LEVEL
COMBINATION TABLE

$f_i^{NPU}$

$f_i^{DSP}$

$f_i^{GPU}$

$f_i^{CPU}$

$f_i^{MEM}$

$f_i^{BUS}$

222～ ENERGY
ESTIMATOR

PERFORMANCE
ESTIMATOR ～223

POWER PROFILE

EXECUTION
TIME RATIO

POWER PROFILER

EXECUTION TIME
ANALYZER

230

250

FIG. 6

S11  S12

| PERFORMANCE LEVEL | NORMALIZED PERFORMANCE VALUE | OPERATING FREQUENCY COMBINATION | | | | | |
|---|---|---|---|---|---|---|---|
| | | NPU | DSP | GPU | CPU | MEM | BUS |
| PL1 | 0.000 | L1 | L1 | L1 | L1 | L1 | L1 |
| PL2 | 0.022 | L2 | L1 | L1 | L1 | L3 | L2 |
| PL3 | 0.044 | L3 | L1 | L1 | L1 | L4 | L3 |
| PL4 | 0.067 | L3 | L1 | L2 | L1 | L4 | L3 |
| ... | ... | ... | ... | ... | ... | ... | ... |
| PL46 | 1.000 | L8 | L8 | L12 | L21 | L13 | L8 |

~S16

S13

FIG. 7

START

GENERATE LOWEST FREQUENCY LEVEL
COMBINATION OF COMPUTING
DEVICES, AND SET LOWEST
FREQUENCY LEVEL COMBINATION AS
CURRENT FREQUENCY LEVEL
COMBINATION OF COMPUTING DEVICES ~S11

GENERATE HIGHER FREQUENCY LEVEL
COMBINATION IN WHICH ONE OPERATING
FREQUENCY LEVEL IN CURRENT
FREQUENCY LEVEL COMBINATION,
MINIMIZING INCREASING AMOUNT OF
ENERTY CONSUMPTION RELATIVE TO
DECREASING AMOUNT OF EXRCUTION TIME,
IS INCREASED BY ONE LEVEL ~S12

S14

SET HIGHER FREQUENCY
LEVEL COMBINATION AS
CURRENT FREQUENCY
LEVEL COMBINATION

S13

HIGHER
FREQUENCY LEVEL COMBINATION =
HIGHEST FREQUENCY LEVEL
COMBINATION?

NO

YES

MAP ALL GENERATED FREQUENCY
LEVEL COMBINATIONS TO
PERFORMANCE LEVELS ~S15

DETERMINE, BASED ON GENERATED
FREQUENCY LEVEL COMBINATIONS,
FREQUENCY LEVEL COMBINATIONS OF
MEMORY CONTROLLER AND DATA BUS ~S16

END

FIG. 8

NNM

| (X) | : EXECUTION TIME OF NODE X |
| Y→ | : EXECUTION TIME OF EDGE Y |

FIG. 9

EXECUTION TIME OF NEURAL NETWORK MODEL
(FIRST PERIOD)

FIG. 10

FIG. 11

FIG. 12

START

TRIGGER NEURAL NETWORK MODEL — S21

TRIGGER FREQUENCY SCALING OF
NEURAL NETWORK MODEL — S22

DETERMINE, BASED ON EXECUTION
TIME ERROR, TARGET PERFORMANCE
LEVEL OF NEURAL NETWORK MODEL — S23

DETERMINE OPERATING FREQUENCY
OF EACH HW DEVICE ACCORDING TO
TARGET PERFORMANCE LEVEL WITH — S24
REFERENCE TO FREQUENCY LEVEL
COMBINATION TABLE

SET SYSTEM FREQUENCY OF
EACH HARDWARE DEVICE — S25

EXECUTE NEURAL NETWORK MODEL
USING HARDWARE DEVICES — S26

RELEASE SET OPERATING FREQUENCY — S27

FEED BACK ACTUAL EXECUTION TIME
OF NEURAL NETWORK MODEL — S28

END

FIG. 13

FIG. 14

FIG. 15

**EUROPEAN SEARCH REPORT**

Europäisches
Patentamt

European
Patent Office

Office européen
des brevets

**Application Number**

EP 24 21 5392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SPANTIDI OURANIA ET AL: "Frequency-based Power Efficiency Improvement of CNNs on Heterogeneous IoT Computing Systems", 2020 IEEE 6TH WORLD FORUM ON INTERNET OF THINGS (WF-IOT), IEEE, 2 June 2020 (2020-06-02), pages 1-6, XP033840949, DOI: 10.1109/WF-IOT48130.2020.9221252 [retrieved on 2020-10-12] * the whole document * | 1-15 | INV. G06F9/50 G06F11/34 ADD. G06F1/324 G06F1/329 |

----

TECHNICAL FIELDS
SEARCHED        (IPC)

G06F

The present search report has been drawn up for all claims

| Place of search | Date of completion of the search | Examiner |
|---|---|---|
| The Hague | 8 May 2025 | Wirtz, Hanno |

EPO FORM 1503 03.82 (P04C01)